# EUROPÄISCHE PATENTSCHRIFT

(11) **EP 1 779 392 B1**
(45) Veröffentlichungstag und Bekanntmachung des Hinweises auf die Patenterteilung: **13.06.2012**
(21) Anmeldenummer: 05768365.8
(22) Anmeldetag: 03.08.2005
(51) Int. Cl.: H01B 1/12, B05D 5/12, C09D 5/24, B05D 7/24, C23C 22/00

(54) **VERFAHREN ZUM BESCHICHTEN VON FEINEN PARTIKELN MIT LEITFÄHIGEN POLYMEREN**
PROCESS FOR COATING FINE PARTICLES WITH CONDUCTIVE POLYMERS
PROCEDE DE REVETEMENT DE FINES PARTICULES AVEC DES POLYMERES CONDUCTEURS

(30) Priorität: 03.08.2004 DE 102004037542; 03.08.2004 DE 102004037552; 30.06.2005 DE 102005030488; 30.06.2005 DE 102005030489
(43) Veröffentlichungstag der Anmeldung: 02.05.2007
(73) Patentinhaber: Chemetall GmbH, 60487 Frankfurt am Main (DE)
(72) Erfinder: PLIETH, Waldfried, 01156 Dresden (DE); RAMMELT, Ursula, 01217 Dresden (DE); HEBESTREIT, Nils, 37339 Breitenworbis (DE); STRATMANN, Martin, 40670 Meerbusch (DE); ROHWERDER, Michael, 40627 Düsseldorf (DE); ADLER, Hans-Jürgen, 01796 Pirna (DE); POTJE-KAMLOTH, Karin, 85640 Putzbrunn (DE); JÄHNE, Evelin, 01458 Ottendorf-Okrilla (DE); PICH, Andrij, 01187 Dresden (DE); DOMES, Heribert, 35789 Weilmünster (DE); SCHNEIDER, Julia, 35041 Marburg (DE); PALIWODA-PROBESKA, Grazyna, 50-305 Wroclau (PL)
(74) Vertreter: Hübner, Günter
(86) Internationale Anmeldenummer: PCT/EP2005/008314
(87) Internationale Veröffentlichungsnummer: WO 2006/015757

(56) Entgegenhaltungen:
- WO-A-94/11885
- DE-A1- 19 919 261
- US-A- 6 132 645

## Beschreibung

Die Erfindung betrifft Verfahren zur Beschichtung von Partikeln, das Gemisch zum Beschichten, die auf diese Weise hergestellte Beschichtung, die derart mit einer elektrisch leitfähigen Beschichtung beschichteten Partikel sowie die Verwendung der derart beschichteten Partikel.

Viele Substanzen aus der Klasse der elektrisch leitfähigen Polymere, insbesondere auf Basis von Polyanilin, sind seit Jahren bekannt. Es wurden viele chemische Systeme mit elektrisch leitfähigen Polymeren entwickelt, die ohne Zusätze anderer elektrisch leitfähiger Stoffe, eingesetzt werden können. Dabei hat sich gezeigt, dass verschiedene Bestandteile zugesetzt und bestimmte Prozessschritte ausgeführt werden müssen, um eine höhere elektrische Leitfähigkeit zu erzielen. In manchen Anwendungen hat sich eine massive Lage oder dünne geschlossene Schicht aus leitfähigen Polymeren wie z.B. beim Korrosionsschutz von metallischen Oberflächen nicht bewährt.

Das Einbringen von leitfähigen Polymeren in eine organische Matrix ist jedoch ohne das Einbringen von Partikeln, die beim Mischen oder Benetzen durch Scherung (oft sogenanntes Mahlen) das Untermischen und Verteilen der leitfähigen Polymere in einer Matrix verstärken, schwierig. Denn pulverförmig ohne Kern hergestellte Pulver aus leitfähigen Polymeren, die in etwa die gleichen Eigenschaften wie die Beschichtungen aus reinem leitfähigen Polymer aufweisen, sind aufwendiger und mit schlechterem Mischungsgrad unter die Bestandteile der Zusammensetzung der organischen Beschichtung einzubringen. Denn da diese Pulver oft aus faserigen adhäsiven Gebilden bestehen, können sie leicht zusammenbacken.

Es sind viele Arten an anorganischen und organischen Partikeln, insbesondere an Pigmenten, grundsätzlich bekannt, die im beschichteten Zustand eingesetzt werden, z.B. mit einer oxidischen Hülle beschichtet wie z.B. etliche Arten Pigmente.

Das Aufbringen des erfindungsgemäßen Gemisches, das Monomere oder/und Oligomere enthält, die zu leitfähigem Polymer reagieren können, auf oder/und in Partikelkeme kann Probleme bereiten, da viele organische Kernmaterialien von den Lösemitteln an- bzw. aufgelöst werden können, da anorganische Partikel nicht so flexibel angepasst werden können wie organische Partikel an die Eigenschaften der Beschichtungen wie z.B. an die Glasübergangstemperatur T₉ und an die Konzentration im Gemisch und auch chemisch bezüglich der Oberflächeneigenschaften z.B. durch Vernetzung bzw. Verpfropfung optimiert werden können. Außerdem kann die Partikelgrößenverteilung bei anorganischen Partikeln nicht so stark variiert werden wie bei organischen Partikeln, insbesondere bezüglich der geringen Breite der Verteilung, aber auch bezüglich der Partikelform. Ferner passen organische Partikel chemisch oft besser zu organischen Bindemitteln, die für die organische Bindemittelmatrix manchmal notwendig sind. Andererseits sind anorganische Partikel eher in Plättchen-, Lineal- oder Nadelform kommerziell erhältlich.

Dabei sind oft Kernmaterialien auszuwählen, die in den gewählten Lösemitteln bzw. Flüssigkeiten möglichst vollständig unlöslich sind wie meistens solche insbesondere auf Basis von Polyacrylat, Polycarbonat, Polyethylen, Polyimid, Polystyrol oder/und Polyurethan bzw. wie alle anorganischen Partikel. Grundsätzlich sind auch andere organische polymere Partikel möglich. Daher ist die Auswahl einerseits der Kernmaterialien, andererseits der verwendbaren Lösemittel bei der Beschichtung organischer Partikel eingeschränkt. Da die Härte der organischen Kerne und ihrer Umhüllung gering ist, ist darauf zu achten, dass die beschichteten Partikel bei stärkerer Scherung (sog. Mahlung) nicht zerstört werden. Im Folgenden wird von Mahlung gesprochen, ohne zu unterscheiden, ob es sich nur um eine Benetzung durch Scherung oder tatsächlich um eine Mahlung mit einer Zerkleinerung handelt.

DE 199 19 261 A1 beschreibt ein Verfahren, bei dem die Oberflächen von oxidischen Partikeln mit einer Lösung aus Monomeren, die für die Bildung leitfähiger Polymere bekannt sind, behandelt und die Monomere durch Reaktion mit einem Oxidationsmittel oxidiert werden, so dass die Monomere in leitfähige Polymere umgesetzt werden. In den Beispielen wird die Präparation von Monomeren auf Basis von Anilin, Pyrrol bzw. Thiophen beschrieben. Die Herstellung der Pulver wird durch Filtrieren, Waschen, Extrahieren mit organischen Lösemitteln und Trocknen abgeschlossen. Das dort beschriebene Verfahren zielt darauf ab, Beschichtungen auf den Oxidpartikeln zu erzeugen, deren elektrische Leitfähigkeit eingestellt werden kann. Hierzu werden abgestimmte Redoxlösungen zur Einstellung des Oxidationsgrades der leitfähigen Polymere eingesetzt. Es werden jedoch keine Korrosionsinhibitoren zugegeben. Die in den Oxidationsmitteln enthaltenen Anionen haben keine korrosionsschützende Wirkung.

US 6,132,645 A und WO 94/11885 A1 beschreiben elektrisch leitfähige Polymer-Zusammensetzungen, die ein Matrixpolymer und einen "Filler" auf Basis von Kohlenstoffpartikeln mit einer Beschichtung aus leitfähigem Polymer enthalten.

Es ist den Anmeldern keine Publikation bekannt, bei der auch nur eine kleine Zahl an Arten an Anionen in Verbindung mit leitfähigen Polymeren systematisch variiert wurde. Da die Herstellung von leitfähigem Polymer, das bei vielen Verbindungen nicht kommerziell erhältlich ist und daher dann mühevoll selber präpariert werden muß, und die Variation der Herstellungsbedingungen sehr aufwendig ist, wird an der systematischen Variation von Edukten für das leitfähige Polymer, von Anionen und Oxidationsmittel in der Forschung offenbar nicht gearbeitet, insbesondere nicht bei solchen auf Basis von Polypyrrol oder Polythiophen.

In den meisten Untersuchungen des Standes der Technik zur Herstellung und Anwendung von leitfähigen Polymeren sind Anionen - in der Regel als Gegenanion oder Dotierungsanion bezeichnet - zwangsläufig aufgrund der Herstellungsbedingungen in den Gemischen enthalten, um die Elektroneutralität des leitfähigen Polymers während der Bildung aufrechtzuerhalten. Es ist jedoch sehr wenig bekannt über die Schutzwirkung von solchen Anionen bei Verwendung leitfähiger Polymere. In der Literatur wird selten über eine korrosionsschützende Wirkung der Anionen im leitfähigen Polymer berichtet. Jedoch wird bei einzelnen Experimenten vorab eine Passivierung der metallischen Oberfläche gewählt, bei der z.B. allein aus Oxalat eine schwerlösliche Metalloxalat-Passivierungsschicht gebildet wird, bevor das chemische System mit dem leitfähigen Polymer aufgebracht wird. Bei der Verwendung z.B. von einem Polyanilin wird üblicherweise ein undotiertes Polyanilin mit diesem System aufgebracht und erst hinterher z.B. mit Phosphorsäure dotiert. Die vorherige Passivierung ist immer dann erforderlich, wenn das leitfähige Polymer elektrochemisch aufgebracht wird. Das gleiche Anion, das bei der Passivierung verwendet wird, ist dann zwangsläufig vorhanden und wird gleichzeitig bei der Polymerisation des leitfähigen Polymers als Gegenion zur Wahrung der Elektroneutralität eingebaut.

Es wurde jetzt festgestellt, dass die zuzusetzenden Anionen nicht nur die erforderliche Elektroneutralität gewährleisten, wenn sie in die Struktur der leitfähigen Polymere eingebaut werden, sondern auch auf einer metallischen Oberfläche eine korrosionsschützende Wirkung ausüben können, wenn sie aus den leitfähigen Polymeren wieder auswandern. Die korrosionsschützende Wirkung tritt bereits bei kleinen Beschädigungen der Beschichtung ein, indem diese ausgewählten Anionen aus dem leitfähigen Polymer auswandern und zu der Beschädigung in der Schutzschicht auf der metallischen Oberfläche wandern. Die defekte metallische Oberfläche kann hierbei in vielen Fällen passiviert werden, insbesondere wenn sie nicht zu groß ist.

Es wurde außerdem jetzt festgestellt, dass beim korrosiven Angriff metallischer Oberflächen meistens eine kathodische Delamination auftritt. Ferner wurde dabei festgestellt, dass dieser kathodischen Delamination vielfach ein Potenzialabfall als Freisetzungssignal vorausläuft. Das Freisetzungssignal tritt generell im gestörten Bereich auf, weil dort das Potenzial bei den gängigen Gebrauchsmetallen und ihren Legierungen fast ausnahmslos einen negativeren Wert hat als das Redoxpotenzial der gängigen leitfähigen Polymere. Dadurch werden letztere negativ polarisiert und somit reduziert.

Bei der kathodischen Delamination läuft dann der eigentlichen Grenzflächenenthaftung eine Potenzialabsenkung voraus, bei der das Potenzial an der Grenzfläche bereits in diesem Vorstadium der Enthaftung von einem Wert, bei dem die gängigen leitfähigen Polymere im oxidierten Zustand vorliegen, absinkt auf einen niedrigeren Wert, was zumindest teilweise zu einer Reduktion führt. Dabei findet an dieser vorgeschobenen kathodischen Front, bei der die Polymerhaftung noch nicht zerstört ist, oft auch eine Sauerstoffreduktion an der Grenzfläche statt, bei der Radikale entstehen, die die Haftung an der Grenzfläche zerstören und somit schließlich zur Enthaftung führen. An einer delaminierten Stelle kann sich auch mindestens eine Blase bilden.

Es wurde jetzt festgestellt, dass diese Effekte ausgenutzt werden können, 1. um eine weitere Delamination zu stoppen oder/und 2. um in diesem frühen Stadium Delamination zu verhindern, indem Anionen freigesetzt werden, die diese Reaktion inhibieren. Wenn die Grenzfläche in diesem frühen Stadium noch nicht enthaftet ist, sind nur geringe Mengen an solchen Anionen wegen des geringen freien Volumens an der noch weitgehend intakten Grenzfläche nötig.

Dieses chemische System funktioniert bei kleinen Defekten, kann aber zu große Defekte nicht passivieren und kann dabei sogar zu einem Desaster führen, wenn die Kationentransportrate im Gesamtsystem zu hoch ist und wenn es dadurch zu einer schnell durchlaufenden Reduktion z.B. der organischen Beschichtung mit einem Gehalt an leitfähigem Polymer kommt. Denn es kommt auf die Abstimmung aller Mengen und Eigenschaften in diesem chemischen System zur Korrosionsinhibierung metallischer Oberflächen an. Aber Chromat allein kann zu große Defekte ebenfalls nicht passivieren.

Bei vielen chemischen Systemen, die leitfähige Polymere enthalten, ist ein auf der Freisetzung von Anionen basierender Effekt (Release-Effekt) erhofft oder vermutet, aber nur in seltenen Einzelfällen auch nachgewiesen worden. Die Einlagerungen der leitfähigen Polymere in einer Beschichtung könnten dabei möglicherweise als Depots für passivierende Substanzen wie z.B. passivierende Anionen dienen. Die hierbei in der Literatur beschriebenen Anionen sind meistens nicht korrosionsinhibierend. Die Ausnutzung eines Release-Effektes für eine korrosionsschützende Anwendung ist jedoch nur selten und dann nur vage angedeutet, nach Kenntnis der Anmelder in der Praxis aber nie nachgewiesen worden und daher eine Vermutung geblieben. Die Auslösung eines Release-Effektes durch eine Potenzialabsenkung ist jedoch nach Kenntnis der Anmelder nie beschrieben worden.

Wenn jedoch korrosionsschützende Anionen im Stand der Technik beschrieben sind, dann ist die korrosionsschützende Wirkung weitgehend auf eine passivierende Wirkung der lokalen defekten Stellen beschränkt, jedoch nicht für den gerade delaminierenden Bereich beschrieben. Bei leitfähigen Polymeren ist dabei zu unterscheiden, ob sie chemisch oder elektrochemisch polymerisiert werden, da bei der elektrochemischen Polymerisation die vergleichsweise unedle metallische Oberfläche vor der Abscheidung des Polymers immer passiviert wird: Beispielsweise wird die metallische Oberfläche bei Verwendung von Oxalatsalzen zuerst passiviert. Die Publikationen, die korrosionsinhibierende Anionen beschreiben, deuten nach Kenntnis der Anmelder nie eine Freisetzung dieser Anionen aufgrund einer Potenzialabsenkung an.

Mehr als ein selbstheilender Effekt ist nur von Chrom-VI-haltigen Beschichtungen, die frei von leitfähigen Polymere sind, bekannt: 1. Passivierung der metallischen Oberfläche am Defekt oder sogar an der beschädigten Stelle (anodische Teilreaktion), 2. Inhibierung der kathodischen Teilreaktion (Sauerstoffreduktion) im gerade delaminierenden oder/und im bereits delaminierten Bereich. Doch hexavalentes Chromat ist bekanntermaßen derart schädlich, dass aus Gründen des Umweltschutzes der Anteil des Chromatgehaltes zum Schutz von metallischen Oberflächen drastisch verringert wird. Aber auch Chromat kann nur kleine und keine großflächigen Defekte passivieren und heilen. Bisher ist jedoch kein chemisches System bekannt, das tatsächlich bei Freiheit von hexavalentem Chromat mehr als einen solchen Selbstheilungseffekt aufweist.

Es bestand daher die Aufgabe, Verfahren für die Beschichtung von anorganischen oder/und organischen Partikeln mit leitfähigen Polymeren vorzuschlagen, die grundsätzlich auch für den Einsatz im Korrosionsschutz von metallischen Oberflächen geeignet sind. Es wäre vorteilhaft, wenn die Präparations- und Beschichtungsverfahren möglichst einfach und ohne besondere Vorrichtungen durchgeführt werden könnten.

Darüber hinaus wäre es besonders vorteilhaft, wenn tatsächlich einzelne der chemischen Systeme mit leitfähigen Polymeren in Beschichtungen auf metallischen Untergründen bei einer Beschädigung der Beschichtung nicht nur durch eine Potenzialänderung mit einem Gradienten des elektrischen Feldes (Freisetzung von Anionen; Release-Effekt) kenntlich machten, sondern auch einen Heilungseffekt (Repair-Effekt) aufweisen würden. Der Heilungseffekt, bei dem eine delaminierte Stelle wieder repariert wird, kann jedoch nur bei einzelnen wenigen chemischen Systemen und unter bestimmten Bedingungen erhofft werden.

Die Aufgabe wird gelöst mit beschichteten Partikeln gemäß Anspruch 1

Hierbei wird/ist vorzugsweise mindestens ein Edukt zur Herstellung von mindestens einem leitfähigen Polymer danach ausgewählt, dass sein Oxidationspotenzial kleiner oder gleich ist dem Zersetzungspotenzial des Wassers oder/und mindestens eines anderen polaren Lösemittels in dem hierzu verwendeten Gemisch.
Hierbei erfolgt die Freisetzung von beweglichen korrosionsschützenden Anionen und gegebenenfalls auch von haftvermittelnden Anionen aus dem entstandenen leitfähigen, Anionen-beladenen Polymer vorzugsweise nicht oder/und nur untergeordnet über eine Deprotonierungsreaktion, sondern vorwiegend oder/und gänzlich über eine Reduktionsreaktion.
Hierbei können diese Anionen insbesonders ausgewählt werden aus solchen auf Basis von Titan-haltigen Säuren, Zirkonium-haltigen Säuren, deren Salzen, deren Estern und deren Gemischen.
Gegebenenfalls enthält das erfindungsgemäße Gemisch mindestens ein Oxidationsmittel, wobei dieses mindestens eine Oxidationsmittel gänzlich oder teilweise entfallen kann, insbesondere wenn mindestens ein Anion gleichzeitig als Oxidationsmittel wirkt oder/und wenn elektrochemisch oder/und photochemisch polymerisiert wird.

Die Aufgabe wird auch gelöst mit einer Verwendung der beschichteten Partikel nach Anspruch 2.

Hierbei wurde vorzugsweise mindestens ein Edukt zur Herstellung von mindestens einem leitfähigen Polymer danach ausgewählt, dass das Oxidationspotenzial des Edukts kleiner oder gleich ist dem Zersetzungspotenzial des Wassers oder/und mindestens eines anderen polaren Lösemittels in dem hierzu verwendeten Gemisch.

Hierbei erfolgt die Freisetzung von beweglichen korrosionsschützenden Anionen und gegebenenfalls auch von haftvermittelnden Anionen aus dem entstandenen leitfähigen Polymer vorzugsweise nicht oder/und nur untergeordnet über eine Deprotonierungsreaktion, sondern vorwiegend oder/und gänzlich über eine Reduktionsreaktion.

Den Anmeldern sind bisher keine Aniline, Polyaniline oder deren Derivate bekannt, die erfindungsgemäß wirken. Besonders bevorzugt ist es, dass die beweglichen korrosionsschützenden Anionen auch 4. die Fähigkeit aufweisen, eine Sauerstoffreduktion im gestörten Bereich zumindest an der Delaminationsfront oder/und an einer vorauseilenden Front zu stoppen oder/und 5. auch haftvermittelnd zu wirken, so dass eine Delamination zumindest teilweise wieder geschlossen wird (Repair-Effekt).

Bei Polyanilinen werden die beweglichen korrosionsschützenden Anionen nicht über eine Reduktionsreaktion aus dem leitfähigen Polymer freigesetzt. Da die Reduktionsprodukte des Polyanilins nicht stabil sind, wird die Reduktionsreaktion im Rahmen der Erfindung nicht gewählt. Vielmehr wird anstelle der Reduktionsreaktion die Deprotonierungsreaktion zur Freisetzung der Anionen gewählt. Den Anmeldern sind keine leitfähigen Polymere auf Basis von Polyanilin bekannt, bei denen diese Freisetzung durch eine Deprotonierungsreaktion erfolgt.

Wenn das Oxidationspotenzial des Edukts kleiner oder gleich ist dem Zersetzungspotenzial des Wassers oder/und mindestens eines anderen polaren Lösemittels in dem hierzu verwendeten Gemisch, bedingt das, dass die Oxidation (= Polymerisation) des leitfähigen Polymers abgeschlossen ist/wird, ohne dass es oder bevor es zu einer Zersetzung z.B. von Wasser und z.B. zur Wasserstoff-Freisetzung kommen kann.

Der Begriff "Dispersion" im Sinne dieser Anmeldung umfasst nicht nur Suspensionen, sondern auch Lösungen und Emulsionen.

Es wurde jetzt nachgewiesen, dass unter anderem Molybdat-Anionen aufgrund einer Potenzialabsenkung im leitfähigen Polymer, das sich im gestörten Bereich befindet, freigesetzt wurden und direkt zum Defekt gewandert sind. Andere Wanderwege können bei dieser Versuchsdurchführung ausgeschlossen werden. Auf der metallischen Oberfläche wurde dann an der beschädigten Stelle eine Molybdat-haltige Passivierungsschicht ausgebildet und durch XPS-Messungen (Röntgenspektroskopie) ermittelt.

Ferner wurde jetzt mit einer Raster-Kelvin-Sonde (SKP) ein Repair-Effekt nachgewiesen, bei dem Figur 2 der DE 102004037542 in Verbindung mit dem dortigen Beispiel 1 Messergebnisse zu einem starken Passivierungseffekt eines beschädigten Bereiches wiedergibt. In Figur 2 wurden jedoch etliche Messkurven weggelassen, die zwischen der bei sehr niedrigem Korrosionspotenzial liegenden ersten Messung und einzelnen Messkurven aus der Mitte der Reihenmessung gewonnen wurden. Dazwischen liegt ein sehr starker Potenzialanstieg um ca. 0,3 V, der dafür spricht, dass die Delamination an einer delaminierenden Stelle zumindest teilweise gestoppt wurde. Figur 1 zeigt im Vergleich hierzu die allgemein auftretenden Effekte.

Es wurde jetzt festgestellt, dass durch den Beginn des Korrosionsprozesses an einer Stelle der Grenzfläche Metall/Beschichtung eine Potenzialänderung mit einem Gradienten des elektrischen Feldes eintritt. Die Freisetzung der Anionen (Release-Effekt) erfolgt jedoch nur, wenn eine solche Potenzialänderung erfolgt. Ohne eine Verletzung der Beschichtung, ohne eine sonstige Störung der Beschichtung oder ohne einen sonstigen Defekt an der Grenzfläche Metall - Beschichtung wie z.B. Verunreinigungen sind die im leitfähigen Polymer eingebauten Anionen gespeichert und die Potenziale konstant. Bereits vor und bei der Enthaftung von metallischer Oberfläche und Beschichtung, wie sie bei einer Beschädigung der Beschichtung auftritt, wird das Elektrodenpotenzial deutlich abgesenkt.

Diese Potenzialabsenkung führt zu einer Reduktion der leitfähigen Polymere insbesondere in der Nähe des Defektes, wobei Anionen mit korrosionsschützenden, passivierenden oder/und haftvermittelnden Eigenschaften freigesetzt werden.

Die Potenzialabsenkung kann hierbei vorzugsweise einerseits mindestens die Werte der Potenzialdifferenz zwischen dem Redoxpotenzial mindestens einer Depotsubstanz (leitfähiges Polymer) im ungestörten Zustand zum Korrosionspotenzial der metallischen Oberfläche an einem Defekt aufweisen, so dass zumindest teilweise vorzeitig oder frühzeitig, bevor eine starke Delamination eintritt, dem Entstehen oder Fortschreiten der Delamination entgegengewirkt werden kann.

Die Potenzialabsenkung kann hierbei vorzugsweise andererseits geringere Werte als die zwischen dem Redoxpotenzial mindestens einer Depotsubstanz im ungestörten Zustand zum Korrosionspotenzial der metallischen Oberfläche an einem Defekt aufweisen, insbesondere an einer der Enthaftung vorauseilenden Front mit einer Potenzialänderung, so dass zumindest teilweise vorzeitig oder frühzeitig, bevor eine schwache oder starke Delamination eintritt, dem Entstehen oder Fortschreiten der Delamination entgegengewirkt werden kann.

Das Redoxpotenzial des leitfähigen Polymers ist vorzugsweise höher als das Passivpotenzial des jeweiligen metallischen Materials, das durch geeignete Beschichtung vor Korrosion geschützt werden soll. Das Redoxpotenzial ist das Potenzial, das sich beim Vorliegen von korrespondierenden Redoxpaaren mit verschiedenen Dotierungsgraden, die gleichzeitig vorhanden sind, unter Normalbedingungen einstellt.

Das Redoxpotenzial kann primär über den Dotierungsgrad, also abhängig von der Art der Anionen und ihrer Menge, eingestellt werden. Hierdurch kann gezielt eine Potenzialdifferenz bei den erfindungsgemäßen Partikeln bzw. in der Beschichtung eingestellt werden. Das Redoxpotenzial des leitfähigen Polymers wird vorzugsweise so eingestellt, dass es oberhalb des Potenzials der passivierten metallischen Oberfläche liegt und deutlich oberhalb des Potenzials der korrodierenden Oberfläche liegt.

Das Passivpotenzial ist das Potenzial an der Grenzfläche der metallischen Oberfläche zu Wasser, bei dem sich eine geschlossene stabile passivierende Deckschicht auf der metallischen Oberfläche ausbildet, so dass eine weitere Auflösung des Metalls unterbunden wird.

Besonders vorteilhaft ist es, wenn das Oxidationspotenzial des Anions höher ist als das Oxidationspotenzial des Eduktes, weil das Anion dann gleichzeitig als Oxidationsmittel wirken kann.

Ferner ist es bevorzugt, dass mindestens eine Depotsubstanz, das heißt, mindestens ein leitfähiges Polymer, ein Redoxpotenzial aufweist, das eine frühzeitige Freisetzung von Anionen ermöglicht, und dass mindestens eine Depotsubstanz eine vergleichsweise niedrige Kationentransportrate der Kationen aus dem Elektrolyten insbesondere vom Defekt oder/und der metallischen Oberfläche aufweist.

Vorzugsweise beträgt die Kationentransportrate der Kationen aus dem Elektrolyten insbesondere vom Defekt oder/und von der metallischen Oberfläche in die mindestens eine Depotsubstanz weniger als 10⁻⁸ cm²/s, besonders bevorzugt weniger als 10⁻¹⁰ cm²/s, ganz besonders bevorzugt weniger als 10⁻¹² cm²/s, insbesondere auch weniger als 10⁻¹⁴ cm²/s.

Der Begriff "gestörter Bereich" bedeutet den Bereich um den Defekt, in dem gegebenenfalls sowohl der Defekt, die beschädigte Stelle, als auch vorauslaufende Fronten der Potenzialänderung enthalten sind, also Änderungen des chemischen Systems aufgetreten sind. Die "beschädigte Stelle" bezeichnet den Defekt einschließlich der gegebenenfalls aufgetretenen Delaminationen. Eine schwache Delamination tritt im Bereich einer vorgeschobenen kathodischen Front auf, bei der die Polymerhaftung noch nicht zerstört ist, oft aber auch eine Sauerstoffreduktion an der Grenzfläche stattfindet. Eine starke Delamination tritt auf, wenn dort zusätzlich noch so viele Radikale entstehen, die die Haftung an der Grenzfläche zerstören, also zur eigentlichen Delamination führen.

In allen Fällen sollten einerseits die Anionen und andererseits die Beschichtung, insbesondere mindestens eine Depotsubstanz oder/und mindestens eine Matrixsubstanz, solche Ionengrößen bzw. Porengrößen aufweisen, dass die gewählten freizusetzenden Anionen nicht oder nicht wesentlich beim Wandern durch die Beschichtung, also insbesondere durch die Depotsubstanz(en) und durch weitere Komponenten wie z.B. die Matrix, behindert werden. Eine sogenannte Matrixsubstanz ist eine Substanz, die zumindest teilweise die Matrix einer Beschichtung bildet oder grundsätzlich bilden könnte wie z.B. ein organisches Polymer/Copolymer, wobei es fließende Übergänge zwischen der Matrix und den weiteren Komponenten wie z.B. nach dem Verfilmen geben kann.

Die beweglichen korrosionsschützenden Anionen oder/und die gegebenenfalls auch vorhandenen haftvermittelnden Anionen weisen vorzugsweise eine Größe auf, die sie in die Lage versetzt, bei Potenzialabfall mit einer hohen Beweglichkeit aus dem leitfähigen Polymer im gestörten Bereich auszuwandem und insbesondere in Richtung auf den Defekt zu wandern. Durch die gezielte Wanderung der Anionen an die beschädigte Stelle könnte in einzelnen chemischen Systemen mit leitfähigen Polymeren eine Passivierung, mit der eine (weitere) Metallauflösung unterdrückt wird, und gegebenenfalls auch eine Reparatur der verletzten Stelle erzielt werden (Repair-Effekt). Voraussetzung für diese Wanderung ist, dass die Porenkanäle für die wandernden Anionen gegebenenfalls einschließlich ihrer Solvathüllen groß genug sind. Bei der chemischen Reaktion an der beschädigten Stelle werden bei der Metallauflösung Kationen gebildet, die mit den Anionen lokal eine Passivierungsschicht im Bereich der Verletzungsstelle bilden können.

Die bisherige Praxis hat jedoch gezeigt, dass die realen chemischen Systeme mit leitfähigen Polymeren fast ausnahmslos nur relativ geringe elektrische Leitfähigkeiten gewähren und dass die Repair-Effekte bisher nicht nachweisbar waren oder so schwach waren, dass sie für die technische Praxis nicht anwendbar sind. Daher ist es besonders bevorzugt, ein chemisches System auszuwählen, bei dem auch ein Repair-Effekt auftritt, der aber offenbar nur in manchen Ausführungsformen und unter bestimmten Bedingungen genutzt werden kann. Darüber hinaus wird angestrebt, die Bedingungen für die Ausbildung eines Potenzialgradienten (Auslösen des Release-Effektes) und gegebenenfalls auch für den Heilungseffekt (Repair-Effekt) zu optimieren, so dass er technisch anwendbar wird. Außerdem soll die enthaftete Grenzfläche durch das chemische System vor (weitergehender) Korrosion geschützt werden.

Ein Vorteil der Verwendung von Partikeln mit einem Anteil an leitfähigem Polymer ist die Vielseitigkeit der Anwendung der Partikel für beliebige metalische Oberflächen bzw. für beliebige Arten der Beschichtungen.

Viele gänzlich oder vorwiegend organisch zusammengesetzte und auch chemisch andersartig zusammengesetzte Beschichtungen könnten durch einen Zusatz von leitfähigen Polymeren verbessert werden: Bei einem geringen Gehalt an elektrisch leitfähigen Bestandteilen insbesondere bezüglich des antistatischen Verhaltens der Beschichtung, bei einem höheren Gehalt derartiger Bestandteile - insbesondere mit einer einstellbaren elektrischen Leitfähigkeit, was beispielsweise für die Abscheidung von Lackkomponenten im elektrischen Feld oder gegebenenfalls auch für die Elektroschweißbarkeit von mit solchen Schichten überzogenen Blechen bedeutsam sein kann. In sehr vielen Anwendungen kann ein hoher oder sogar besserer Korrosionsschutz von metallischen Oberflächen gewonnen werden.

Partikel im wesentlichen bestehend aus leitfähigem Polymer, Partikel enthaltend leitfähiges Polymer oder/und Partikel als Kerne mit einer sehr dünnen, dünnen, dicken oder sehr dicken Hülle (Core-Shell-Particles) aus leitfähigem Polymer können hilfreich sein, leitfähige Polymere in eine Masse, Dispersion oder Lösung in partikulärer, dünnflüssiger oder hochviskoser Form einzubringen.

### Zusammensetzungen des Edukt-Gemisches bzw. des Produkt-Gemisches:

Die Übergänge zwischen dem Edukt-Gemisch und dem Produkt-Gemisch sind oft fließend. Daher kann in dem Edukt-Gemisch bereits ein wesentlicher Gehalt des leitfähigen Polymers gebildet worden sein oder/und in dem Produkt-Gemisch noch ein wesentlicher Gehalt an Bestandteilen zur weiteren Ausbildung an leitfähigem Polymer enthalten sein.

Vorzugsweise wird mindestens ein Edukt danach ausgewählt, dass es in Wasser polymerisiert werden kann oder/und dass sein Oxidationspotenzial kleiner oder gleich ist im Vergleich zum Zersetzungspotenzial des Wassers bei einem Wasser enthaltenden Lösemittelgemisch oder bei Wasser als einzigem Lösemittel.

### Dieses Edukt-Gemisch kann auch dadurch gekennzeichnet sein, dass es

- gegebenenfalls mindestens ein Monomer oder/und mindestens ein Oligomer mit einem Gehalt an Edukt(en) im Bereich von 0,001 bis 25 oder bis 20 Gew.-%,
- mindestens ein bewegliches korrosionsschützendes Anion oder/und mindestens ein Salz, einen Ester oder/und mindestens eine Säure als Träger dieses Anions, mit einem Gehalt an beweglichen korrosionsschützenden Anionen im Bereich von 0,05 bis 50 Gew.-%, berechnet als Anion(en),
- gegebenenfalls mindestens ein Oxidationsmittel mit einem Gehalt an Oxidationsmitteln im Bereich von 0,05 bis 50 Gew.-%,
- mindestens eine Art anorganischer oder/und organischer Partikel mit einem Gehalt an Partikeln im Bereich von 1 bis 95 oder bis 96 Gew.-%,
- wobei alle diese Gehalte und gegebenenfalls weitere, hier nicht genannte Zusätze, jedoch ohne Lösemittel, insgesamt 100 Gew.-% ergeben sowie
- mindestens ein Lösemittel für die Edukte, für die Anionen oder/und für die Oxidationsmittel enthält mit Gehalten an Lösemitteln im Bereich von 1 bis 5000 Gew.-%, über 100 Gew.-% hinaus angegeben,
- wobei die Summe der Feststoffe 100 Gew.-% ergibt, wenn - gegebenenfalls später - Monomer/Oligomer oder Oxidationsmittel zugesetzt worden ist.

Im Abschnitt der verfahrenstechnischen Varianten wird auf Varianten der Zugabe insbesondere bei Monomer/Oligomer oder Oxidationsmittel eingegangen. Denn nach dem Zusammentreffen von Monomer/Oligomer, Anionen und Oxidationsmittel beginnt in der Regel die Umsetzung zu leitfähigem Polymer.

Besonders bewährt, insbesondere für organische Partikel, haben sich Edukt-Gemische mit folgender Zusammensetzung, insbesondere für die Beschichtung der Partikel:
- gegebenenfalls 0,001 bis 0,5 Mol/L von mindestens einem Monomer oder/und von mindestens einem Oligomer des Edukt-Gemisches, soweit nicht hohe Konzentrationen zu Agglomerationen der beschichteten Partikel führen, vorzugsweise 0,01 bis 0,2 Mol/L, insbesondere 0,001 bis 0,5 Gew.-%,
- 0,01 bis 1 Mol/L von mindestens einem beweglichen korrosionsschützenden Anion, gegebenenfalls mindestens ein Salz, ein Ester oder/und mindestens eine Säure als Träger dieses Anions, vorzugsweise 0,1 bis 0,8 Mol/L, insbesondere 0,05 bis 3 Gew.-%, jeweils berechnet als Anion,
- gegebenenfalls wird mindestens ein Oxidationsmittel in der ein- bis fünffachen Menge des Gehaltes der Edukte (= Summe der Monomere und Oligomere) zugesetzt, also vorzugsweise 0,01 bis 2,5 Mol/L, besonders bevorzugt 0,05 bis 1,5 Mol/L, insbesondere 0,1 bis 3 Gew.-%, wobei der Gehalt des mindestens einen Oxidationsmittels vorzugsweise in manchen Ausführungsformen das Ein- bis Fünffache der Gehalte an Monomeren und Oligomeren beträgt,
- 1 bis 96 Gew.-% anorganische oder/und organische Partikel, vorzugsweise von mindestens einer chemischen Verbindung, wobei darauf zu achten ist, dass das Edukt- und das daraus entstehende Produkt-Gemisch auch bei hoher Partikeldichte stabil bleiben, also nicht oder nicht stärker agglomerieren, vorzugsweise 1,5 bis 60 Gew.-%, besonders bevorzugt 2 bis 50 Gew.-%, wobei die Konzentrationen bei organischen Partikeln oft nur bis 20 Gew.-% im Edukt- oder/und Produkt-Gemisch betragen,
- wobei alle diese Gehalte und gegebenenfalls weitere, hier nicht genannte Zusätze, jedoch ohne Lösemittel, insgesamt 100 Gew.-% ergeben, wenn - gegebenenfalls später - Monomer/Oligomer oder Oxidationsmittel zugesetzt worden ist, sowie
- mindestens ein Lösemittel für die Edukte, für die Anionen oder/und für die Oxidationsmittel mit Gehalten im Bereich von 2 bis 4000 Gew.-%, über 100 Gew.-% hinaus angegeben.

Das Edukt-Gemisch enthält in einer Ausführungsvariante vorzugsweise, insbesondere für anorganische Partikel,
- gegebenenfalls mindestens ein Monomer oder/und mindestens ein Oligomer mit einem Gehalt an Edukt(en) im Bereich von 1 bis 25 Gew.-%,
- mindestens ein bewegliches korrosionsschützendes Anion oder/und mindestens ein Salz, mindestens einen Ester oder/und mindestens eine Säure als Träger dieser Anionen, jeweils berechnet als Anion, mit einem Gehalt an beweglichen korrosionsschützenden Anionen im Bereich von 1 bis 35 Gew.-%,
- gegebenenfalls mindestens ein Oxidationsmittel mit einem Gehalt an Oxidationsmitteln im Bereich von 1 bis 40 Gew.-%, und
- mindestens eine Art anorganische oder/und organische Partikel mit einem Gehalt an insbesondere anorganischen Partikeln im Bereich von 35 bis 95 Gew.-%.

Das Edukt-Gemisch enthält in einer anderen Ausführungsvariante vorzugsweise, insbesondere für organische Partikel,
- gegebenenfalls mindestens ein Monomer oder/und mindestens ein Oligomer mit einem Gehalt an Edukt(en) im Bereich von 0,5 bis 18 Gew.-%,
- mindestens ein bewegliches korrosionsschützendes Anion mit einem Gehalt an beweglichen korrosionsschützenden Anionen im Bereich von 0,5 bis 35 Gew.-%,
- gegebenenfalls mindestens ein Oxidationsmittel mit einem Gehalt an Oxidationsmitteln im Bereich von 0,2 bis 30 Gew.-%, und
- mindestens eine Art anorganische oder/und organische Partikel mit einem Gehalt an insbesondere anorganischen Partikeln im Bereich von 10 bis 40 Gew.-%.

Das Edukt-Gemisch enthält vorzugsweise
- gegebenenfalls mindestens ein Monomer oder/und mindestens ein Oligomer mit einem Gehalt an Edukt(en) im Bereich von 2 bis 20 Gew.-%,
- mindestens ein bewegliches korrosionsschützendes Anion mit einem Gehalt an beweglichen korrosionsschützenden Anionen im Bereich von 2 bis 30 Gew.-%,
- gegebenenfalls mindestens ein Oxidationsmittel mit einem Gehalt an Oxidationsmitteln im Bereich von 2 bis 25 Gew.-%, und
- mindestens eine Art anorganische oder/und organische Partikel mit einem Gehalt an insbesondere anorganischen Partikeln im Bereich von 15 bis 65 Gew.-%.

Das Gemisch zur Ausbildung der Beschichtung, die leitfähiges Polymer auf oder/und in Partikeln enthält, enthält vorzugsweise:
- jeweils mindestens ein Oligomer, Polymer, Copolymer, Blockcopolymer oder/und Pfropfcopolymer mit einem Gehalt an leitfähigen Polymeren im Bereich von 0,1 bis 30 Gew.-%, wobei das leitfähige Polymer vorwiegend, weitgehend oder gänzlich in Wasser polymerisiert wurde,
- mindestens eine Art beweglicher korrosionsschützender Anionen mit einem Gehalt an beweglichen korrosionsschützenden Anionen im Bereich von 0,1 bis 40 Gew.-%, wobei diese Anionen über eine Reduktionsreaktion aus dem leitfähigen Polymer freigesetzt werden können,
- gegebenenfalls mindestens ein Oxidationsmittel mit einem Gehalt an Oxidationsmitteln im Bereich von 0,1 bis 30 Gew.-%, wobei dieses mindestens eine Oxidationsmittel gänzlich oder teilweise entfallen kann, wenn mindestens ein Anion gleichzeitig als Oxidationsmittel wirkt,
- gegebenenfalls mindestens eine Art anorganische oder/und organische Partikel mit einem Gehalt an anorganischen Partikeln im Bereich von 30 bis 98 Gew.-%, die mit leitfähigem Polymer beschichtet sein können,
- wobei alle diese Gehalte einschließlich gegebenenfalls weiterer, hier nicht genannter Zusätze, jedoch ohne Lösemittel, insgesamt 100 Gew.-% ergeben sowie
- mindestens ein Lösemittel für das mindestens eine Edukt, für die mindestens eine Art Anionen oder/und für das mindestens eine Oxidationsmittel mit Gehalten im Bereich von 0,1 bis 4000 Gew.-%, über 100 Gew.-% hinaus angegeben.

Vorzugsweise liegt der Gehalt an Edukt(en) bei Werten von jeweils etwa 0, 1, 2, 4, 6, 8, 10, 12, 14, 16, 18, 20 bzw. 22 Gew.-%. Vorzugsweise liegt der Gehalt an beweglichen korrosionsschützenden Anionen bei Werten von jeweils etwa 2, 4, 6, 8, 10, 12, 14, 16, 18, 20, 22, 24, 26, 28, 30 bzw. 32 Gew.-%. Vorzugsweise liegt der Gehalt an Oxidationsmitteln bei Werten von jeweils etwa 2, 4, 6, 8, 10, 12, 14, 16, 18, 20, 22, 24, 26, 28, 30, 32, 34, 36 bzw. 38 Gew.-%. Vorzugsweise liegt der Gehalt an Partikeln bei Werten von jeweils etwa 6, 8, 10, 12, 14, 16, 18, 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, 90 bzw. 92 Gew.-%.

Vorzugsweise liegt der Gehalt an Edukt(en) bei Werten von jeweils etwa 0,05, 0,1, 0,15, 0,2, 0,25, 0,3, 0,35, 0,4 bzw. 0,45 Mol/L. Vorzugsweise liegt der Gehalt an beweglichen korrosionsschützenden Anionen bei Werten von jeweils etwa 0,05, 0,1, 0,15, 0,2, 0,25, 0,3, 0,35, 0,4, 0,45, 0,5, 0,55, 0,6, 0,65, 0,7, 0,75, 0,8, 0,85, 0,9, 0,95, bzw. 0,85 Mol/L. Vorzugsweise liegt der Gehalt an Oxidationsmitteln bei Werten von jeweils etwa 0, 0,1, 0,2, 0,3, 0,4, 0,5, 0,6, 0,7, 0,8, 0,9, 1, 1,1, 1,2, 1,3, 1,4, 1,5, 1,6, 1,7, 1,8, 1,9, 2, 2,1 bzw. 2,2 Mol/L.

Vorzugsweise liegt der Gehalt an Edukt(en) im Bereich von 0,1 bis 24 Gew.-%, im Bereich von 0,001 bis 0,5 Gew.-%, im Bereich von 1 bis 25 Gew.-%, im Bereich von 0,5 bis 18 Gew.-%, im Bereich von 2 bis 20 Gew.-%, im Bereich von 8 bis 22 Gew.-% oder im Bereich von 0,8 bis 18 Gew.-%, besonders bevorzugt im Bereich von 0,1 bis 15 Gew.-%, im Bereich von 2 bis 12 Gew.-% oder im Bereich von 4 bis 16 Gew.-%, ganz besonders bevorzugt im Bereich von 0,3 bis 8 Gew.-%, im Bereich von 5 bis 14 Gew.-% oder im Bereich von 6 bis 12 Gew.-%.

Vorzugsweise liegt der Gehalt an Oxidationsmittel(n) im Bereich von 0,1 bis 45 Gew.-%, im Bereich von 0,001 bis 0,5 Gew.-%, im Bereich von 0,1 bis 3 Gew.-%, im Bereich von 1 bis 40 Gew.-%, im Bereich von 0,2 bis 30 Gew.-%, im Bereich von 2 bis 25 Gew.-% oder im Bereich von 0,01 bis 38 Gew.-%, besonders bevorzugt im Bereich von 0,1 bis 15 Gew.-%, im Bereich von 0,2 bis 32 Gew.-% oder im Bereich von 2 bis 26 Gew.-%, ganz besonders bevorzugt im Bereich von 0,3 bis 28 Gew.-%, im Bereich von 4 bis 24 Gew.-% oder im Bereich von 5 bis 38 Gew.-%.

Vorzugsweise liegt der Gehalt an beweglichen korrosionsschützenden Anionen oder/und an mindestens einem Salz, mindestens einem Ester oder/und mindestens einer Säure als Träger dieser Anionen, jeweils berechnet als Anion, im Bereich von 0,05 bis 3 Gew.-%, im Bereich von 1 bis 35 Gew.-%, im Bereich von 10 bis 40 Gew.-%, im Bereich von 0,1 bis 30 Gew.-%, im Bereich von 5 bis 38 Gew.-%, im Bereich von 12 bis 42 Gew.-% oder im Bereich von 0,1 bis 45 Gew.-%, besonders bevorzugt im Bereich von 0,2 bis 26 Gew.-%, im Bereich von 0,4 bis 42 Gew.-% oder im Bereich von 2 bis 30 Gew.-%, ganz besonders bevorzugt im Bereich von 3 bis 38 Gew.-%, im Bereich von 5 bis 25 Gew.-% oder im Bereich von 14 bis 36 Gew.-%. Vielfach empfiehlt es sich, den Gehalt an Anionen im Vergleich zu den theoretisch in das leitfähige Polymer einbaubaren Anionen-Gehalten im Überschuss zuzusetzen oder etwa in dem stöchiometrisch einbaubaren Gehalt.

Vorzugsweise liegt der Gehalt an mindestens einer Art an anorganischen oder/und organischen Partikeln im Bereich von 1 bis 96 Gew.-%, im Bereich von 35 bis 95 Gew.-%, im Bereich von 10 bis 40 Gew.-%, im Bereich von 15 bis 65 Gew.-%, im Bereich von 2 bis 80 Gew.-%, im Bereich von 5 bis 65 Gew.-% oder im Bereich von 1,5 bis 48 Gew.-%, besonders bevorzugt im Bereich von 0,8 bis 15 Gew.-%, im Bereich von 1,2 bis 32 Gew.-% oder im Bereich von 2 bis 46 Gew.-%, ganz besonders bevorzugt im Bereich von 1,3 bis 18 Gew.-%, im Bereich von 4 bis 24 Gew.-% oder im Bereich von 5 bis 28 Gew.-%, vor allem im Bereich von 6 bis 16 Gew.-%.

Vorzugsweise liegt der Gehalt an Lösemittel(n), über den Gehalt an Feststoffen = 100 Gew.-% hinaus angegeben, im Bereich von 2 bis 4000 Gew.-%, im Bereich von 1 bis 2500 Gew.-%, im Bereich von 5 bis 3000 Gew.-%, im Bereich von 10 bis 800 Gew.-%, im Bereich von 2 bis 300 Gew.-%, im Bereich von 20 bis 2500 Gew.-% oder im Bereich von 30 bis 600 Gew.-%, besonders bevorzugt im Bereich von 1 bis 1500 Gew.-%, im Bereich von 2 bis 1200 Gew.-% oder im Bereich von 50 bis 600 Gew.-%, ganz besonders bevorzugt im Bereich von 30 bis 400 Gew.-%, im Bereich von 5 bis 160 Gew.-% oder im Bereich von 5 bis 80 Gew.-%.

Darüber hinaus kann ein Gehalt an mindestens einem haftvermittelnden Anion zugesetzt werden, beispielsweise auf Basis von Phosphor enthaltendem Oxyanion wie z.B. Phosphonat, Silan, Siloxan, Polysiloxan oder/und Tensid, vorzugsweise mit einem Gehalt im Bereich von 1 bis 20 Gew.-%, besonders bevorzugt mit einem Gehalt im Bereich von 1,5 bis 18 Gew.-% oder im Bereich von 2 bis 12 Gew.-% oder/und insbesondere mit einem Anteil an diesen Anionen zur Summe aller Anionen im Bereich von 1 bis 70 mol%, vorzugsweise im Bereich von 10 bis 50 mol%. In vielen Ausführungsvarianten wird jedoch kein haftvermittelndes Anion zugesetzt sein oder nur in vergleichsweise geringen Mengen vorhanden sein.

Das Gewichtsverhältnis der Bestandteile im Gemisch als Edukt(e) : beweglichen korrosionsschützenden und gegebenenfalls auch haftvermittelnden Anionen : Oxidationsmittel(n) : anorganischen Partikeln liegt in manchen Ausführungsvarianten vorzugsweise bei 1 : (0,5 bis 30) : (0,5 bis 10) : (0,5 bis 8) und besonders bevorzugt bei 1 : (1 bis 25) : (1 bis 8) : (1 bis 7), wobei Edukt(e) oder Oxidationsmittel bei diesen Verhältnissen gegebenenfalls auch zeitweilig entfallen kann.

Die Gehalte dieser Bestandteile können in weiten Grenzen variiert werden. Die Variation ist insbesondere von der Dicke der Beschichtung abhängig: Es können ultradünne, dünne, dicke oder sehr dicke Beschichtungen aufgebracht werden, die beispielsweise eine Schichtdicke im Bereich von 0,1 bis 10 nm, von > 1 bis 100 nm, von > 10 bis 1000 nm (1 µm), von > 100 nm bis 10 µm oder von > 0,5 µm bis 50 µm aufweisen. Es können auch Bestandteile mit geringer oder hoher Dichte ausgewählt werden. Ferner kann auch die spezifische Oberfläche der anorganischen Partikel sehr stark eingehen, wie z.B. bei SiO₂-Pulvern, die durch Flammenhydrolyse hergestellt wurden.

Darüber hinaus kann das Edukt-Gemisch und gegebenenfalls auch das hieraus entstehende Produkt-Gemisch auch jeweils mindestens ein Tensid, ein Schutzkolloid, einen Säurefänger oder/und einen Komplexbildner enthalten. Dem Gemisch kann mindestens ein Additiv zugesetzt werden, gegebenenfalls mindestens ein Tensid wie z.B. jeweils mindestens ein nichtionisches, anionisches oder/und amphoteres Tensid, mindestens ein Schutzkolloid wie z.B. ein Polyvinylalkohol, mindestens ein Säurefänger wie z.B. Ammoniak bzw. eine schwache Base wie z.B. ein Acetat oder/und mindestens ein Komplexbildner wie z.B. Ammoniak, Citronensäure, EDTA bzw. Milchsäure. Der Gehalt des mindestens einen Tensids liegt vorzugsweise bei 0,01 bis 1,5 Gew.-%. Der Gehalt des mindestens einen Schutzkolloids, des mindestens einen Säurefängers oder/und des mindestens einen Komplexbildners liegt jeweils vorzugsweise bei 0,01 bis 0,8 Gew.-%.

Das Edukt-Gemisch verarmt insbesondere aufgrund der Beschichtung der Partikel an gelösten Komponenten des Edukt-Gemisches. Daher ist die Konzentration der entsprechenden gelösten Komponenten im Produkt-Gemisch entsprechend niedrig.

Das im Edukt-Gemisch hierbei durch chemische Reaktion entstehende leitfähige Polymer befindet sich dann im sogenannten Produkt-Gemisch.

### Verfahrenstechnische Varianten bei der Umsetzung zu und Beschichtung mit leitfähigem Polymer:

Die Partikel können bei Bedarf vor dem Dispergieren oder vor dem Zusetzen zu dem Edukt-Gemisch getrocknet oder/und erwärmt werden. Als Lösemittel wird bevorzugt ein Gemisch mit höherem Wassergehalt oder nur Wasser eingesetzt. In einer Reihe von Varianten ist es jedoch förderlich oder notwendig, einen geringen Zusatz an organischem Lösemittel, insbesondere mindestens einen Alkohol, zuzugeben, vor allem 1 bis 10 Gew.-% an mindestens einem Alkohol wie z.B. Ethanol, Propanol oder/und Isopropanol.

Vorteilhafterweise wird die Lösung, die Dispersion das Sol oder/und das Gel des Eduktes vor dem Zusetzen zu dem Edukt-Gemisch mit Inertgas wie z.B. Argon oder/und Stickstoff gespült, um hierdurch Luftsauerstoff fernzuhalten, eine bessere Durchmischung, eine Einstellung einer definierten Atmosphäre in der Gasphase über dem Gemisch oder/und eine Trocknung nichtwässeriger Solventien zu erzielen.

Beim Zusammenmischen der Bestandteile des Edukt-Gemisches in Form z.B. einer Lösung oder Dispersion, die zur Beschichtung der Partikel dienen soll, hat sich in mehreren Ausführungsvarianten bewährt, alle Bestandteile außer dem Oxidationsmittel unter Bewegen des Gemisches zuzusetzen.

Oft werden beim Zusammenmischen des Edukt-Gemisches zuerst die anorganischen oder/und organischen Partikel und die mindestens eine Flüssigkeit und gegebenenfalls noch das mindestens eine Edukt vorgelegt. Vorzugsweise werden alle Bestandteile jeweils in Form einer Lösung oder/und Dispersion dem Gemisch zugesetzt.

In einer bevorzugten Ausführungsform wird das Edukt-Gemisch beim Zusammenmischen der Bestandteile vorzugsweise so lange, bis sich mindestens eine Monolage des Eduktes oder der Edukte auf mindestens einem Teil der Oberflächen der anorganischen oder/und organischen Partikel ausgebildet hat, frei von Oxidationsmitteln gehalten, damit sich erst einmal mindestens eine Monolage insbesondere durch Adsorption ausbilden kann. Dies ist insbesondere für anorganische Partikel von Vorteil. Die Monolage enthält dann vorwiegend oder gänzlich Edukt(e) und bewegliche korrosionsschützende Anionen, wobei die Anlagerung von Flüssigkeit(en), die grundsätzlich hierbei auch in größerem Maße möglich ist, hierbei nicht berücksichtigt wird. Die Zeitdauer bis zur Ausbildung von mindestens einer Monolage dauert meistens mindestens eine Sekunde, manchmal auch mindestens eine Minute. Vorzugsweise wird dann erst nach der Ausbildung von mindestens einer Monolage Oxidationsmittel, insbesondere in der Form einer Lösung, zugesetzt. Hierdurch wird das mindestens eine Edukt zusammen mit dem mindestens einen beweglichen korrosionsschützenden Anion zuerst auf den Partikeln angelagert, so dass eine vergleichsweise gleichmäßige Ausbildung der Beschichtung und teilweise auch eine höhere elektrische Leitfähigkeit der Beschichtung mit den später ausgebildeten leitfähigen Polymeren erzielt wird als bei einer anderen Reihenfolge des Zusammenmischens. Es ist vorteilhaft, zuerst zumindest teilweise Edukt auf den Partikeloberflächen anzulagern, bevor Anionen dazukommen. Dazwischen können Wartezeiten insbesondere im Bereich von 0,5 und 10 Minuten liegen. Es ist bevorzugt, das Gemisch hierbei ständig in Bewegung zu halten.

In einer weiteren Ausführungsform kann das Gemisch beim Zusammenmischen der Bestandteile auch so lange, bis sich mindestens eine Monolage vorwiegend oder gänzlich aus mindestens einem beweglichen korrosionsschützenden Anion und gegebenenfalls aus Oxidationsmittel(n) auf mindestens einem Teil der Oberflächen der insbesondere anorganischen Partikel ausgebildet hat, frei von den Edukten der leitfähigen Polymere gehalten werden. Das hätte dann den Vorteil, dass die Monolage vorwiegend oder gänzlich Anionen oder/und Oxidationsmittel enthält, wobei die Anlagerung von Flüssigkeit(en) hierbei nicht berücksichtigt wird. Vorzugsweise erst nach der Ausbildung von mindestens einer Monolage im wesentlichen aus diesen Anionen wird dann mindestens ein Edukt, insbesondere in der Form einer Lösung oder Dispersion, dem Edukt-Gemisch zugesetzt. Dadurch bildet sich oft ein eher zwiebelschaliger Aufbau der Beschichtung oder eine Beschichtung mit einem Gradienten aus.

Mindestens ein bewegliches korrosionsschützendes Anion sollte jedoch vorzugsweise entweder vor Zugabe des Oxidationsmittels oder vor Zugabe des Eduktes zugesetzt werden.

Dem Edukt-Gemisch aus Oxidationsmittel und Monomer/Oligomer zur Umsetzung zu leitfähigem Polymer kann zusätzlich mindestens ein Elektrolyt wie z.B. mindestens ein Salz oder/und mindestens eine Säure zugesetzt werden, dessen Anion in das leitfähige Polymer als Dotierion eingebaut wird und das als Anion korrosionsschützende Wirkung hat. Hierbei kann der mindestens eine Elektrolyt, der nicht als Oxidationsmittel wirkt, vor oder beim Ausbilden der Monolage oder der Edukt-Schicht auf einem Partikel dem Gemisch zugesetzt werden.

Falls jedoch alle Bestandteile im Edukt-Gemisch außer den Partikeln enthalten wären und wenn dann die Partikel als letzte Komponente zugesetzt werden würden, würde die Oxidation der Edukte bereits begonnen oder weit fortgeschritten sein. Es könnte dann gegebenenfalls zu Störungen der Beschichtung wie z.B. zu unvollständiger Belegung oder zur Nicht-Belegung der Partikel kommen.

Vorzugsweise wird das Edukt-Gemisch - auch bevor alle weiteren Bestandteile zugesetzt sind - sowie gegebenenfalls auch das hieraus entstehende Produkt-Gemisch in Bewegung gehalten, wobei das Mischen bei laminarer oder/und turbulenter Strömung, bei statischem oder/und dynamischem Mischen oder/und auch durch Kneten, Sprühen oder/und Zerstäuben durchgeführt werden kann.

Generell könnten sonst ohne Bewegen des Gemisches wie z.B. Rühren oder/und Ultraschallbehandlung Inhomogenitäten auftreten. Ein Bewegen der Mischung über 1 bis 40 Minuten, insbesondere über 5 bis 30 Minuten, ist bevorzugt. Vor der Zugabe der beschichteten anorganischen Partikel empfiehlt es sich, diese vor Zugabe in eine Flüssigkeit oder in das Gemisch durch Bewegen wie z.B. längeres Rühren zu redispergieren, um die Partikel homogen zu verteilen. Sie können dann auch meistens nur durch Bewegen des Gemisches verteilt gehalten werden.

In vielen Fällen wird vorzugsweise ein pH-Wert im Bereich von 0,5 bis 8, vorzugsweise von 1 bis 7, in manchen Fällen von 2 bis 6 oder von 4 bis 8, eingestellt, wobei die Art und die Stabilitätsbereiche der Anionen hierbei für die Auswahl des konkreten pH-Wertes ausschlaggebend sind. Allerdings erfordern insbesondere bestimmte Oxidationsmittel wie z.B. Molybdat oder/und Wolframat bei bestimmten pH-Wertebereichen eine erhöhte Temperatur. Bei bestimmten anorganischen Partikeln wie z.B. Carbonaten und Sulfiden ist es jedoch bevorzugt, nicht im stärker sauren Bereich zu arbeiten, um die Partikel nicht zu zersetzen, insbesondere nicht bei pH-Werten außerhalb des Bereichs von 5 bis 7. Andererseits ist zu beachten, dass bei pH-Werten größer 6 oder größer 7 in manchen Fällen Probleme mit dem leitfähigen Polymer auftreten können wie z.B. eine Überoxidation. Eine Absenkung des pH-Werts des Gemisches hat außerdem den Vorteil, dass dadurch die Leitfähigkeit des Gemisches erhöht werden kann. Bei der Herstellung z.B. von Polypyrrol ist es oft vorteilhaft, den pH-Wert des Gemisches auf Werte von nicht mehr als 3 abzusenken. Allerdings ist bei der pH-Werteinstellung zu beachten, ob der gewählte pH-Wert für die Herstellung des leitfähigen Polymers , der zu beschichtenden Partikel und gegebenenfalls auch für die Verwendung der beschichteten Partikel in einer Beschichtung wie z.B. in einem Lack geeignet oder günstig ist.

Vielfach wird bei einer Temperatur insbesondere zum Mischen, zur Zugabe des Oxidationsmittels, für die chemische Reaktion oder/und zur Ausbildung der erfindungsgemäßen Beschichtung im Bereich von 0 bis 60 °C, vorzugsweise im Bereich von 10 bis 50 °C, gearbeitet. Vielfach ermöglicht und empfiehlt sich das Arbeiten bei Raumtemperatur. Die Temperatur des Edukt-Gemisches kann jedoch bei manchen Ausführungsvarianten in jedem Mischungsstadium und gegebenenfalls auch noch danach bis zur Ausbildung der leitfähigen Beschichtung - insbesondere bei der Beschichtung von anorganischen Partikeln - vorzugsweise im Bereich von 0 °C bis zum Siedepunkt der niedrigst siedenden Flüssigkeit liegen oder nur bis zur Temperatur der Ausbildung eines azeotropen Gemisches, vorzugsweise im Temperaturbereich von 0 bis 200 °C, besonders bevorzugt im Bereich von 5 bis 120 °C, ganz besonders bevorzugt im Bereich von 10 bis 70 °C. Vorteilhafterweise wird die gewählte Temperatur näherungsweise vom Mischen bis zur fertigen Ausbildung der Beschichtung auf den Partikeln in etwa beibehalten.

Die Beschichtung der Partikel im Edukt-/Produkt-Gemisch zur Ausbildung von Core-Shell-Partikeln beträgt vorzugsweise 1 Minute bis 5 Stunden, besonders bevorzugt 5 Minuten bis 4 Stunden, ganz besonders bevorzugt 10 Minuten bis 3 Stunden, insbesondere 15 Minuten bis 2 Stunden.

### Bewegliche korrosionsschützende Anionen:

Bewegliche korrosionsschützende Anionen haben im Edukt-Gemisch und in der Zusammensetzung der Beschichtung des Produktes die Aufgabe, die zur Ladungskompensation der bei der Oxidation auf den Polymerketten entstehenden elektrophilen Zentren die notwendigen Ladungen bereitzustellen sowie eine durch Adsorption auf Metalloberflächen einleitende korrosionsschützende Wirkung bereitzustellen.

Wenn einem Edukt-Gemisch keine Anionen zugesetzt werden, wird das leitfähige Polymer irgendwelche Anionen, die in der Dispersion vorhanden sind, in sein Gitter einbauen, kann dann aber keine beweglichen korrosionsschützenden Anionen einbauen. Es werden - falls überhaupt - dann häufig porösere, dünnere und schlechter elektrisch leitende Schichten ausgebildet als nach einem erfindungsgemäßen Verfahren.

Wenn ein Anion bei den weitaus meisten Untersuchungen des Standes der Technik zur Herstellung und Anwendung von leitfähigen Polymeren zugegeben wurde, wurde in der Regel die Elektroneutralität des leitfähigen Polymers während der Bildung erreicht. Außerdem werden durch das Anion bestimmte Eigenschaften des leitfähigen Polymers beeinflusst wie z.B. die elektrische oder ionische Leitfähigkeit sowie die Morphologie und die Austrittsarbeit (Oxidationspotenzial). Es wurde jetzt erkannt, dass durch das Anion auch ein Korrosionsschutz erzielt werden kann.

Das mindestens eine Anion weist vorzugsweise eine Wasserlöslichkeit oder eine Löslichkeit in dem mindestens einen polaren Lösemittel oder Lösemittelgemisch von mindestens 1 • 10⁻³ Mol/L auf, da sonst das Anion auch nicht mehr in das leitfähige Polymer (= Salz) eingebaut werden kann.

Hierbei kann das mindestens eine bewegliche korrosionsschützende Anion, das nicht als Oxidationsmittel wirkt, vor oder beim Ausbilden der Monolage oder der Schicht auf den Partikeln dem Gemisch zugesetzt werden. Es kann jedoch auch mindestens ein bewegliches korrosionsschützendes Anion, das gleichzeitig als Oxidationsmittel wirkt, wie Molybdat oder/und Wolframat, zusätzlich zu dem/den nicht oxidierend wirkenden beweglichen korrosionsschützenden Anion(en) zugesetzt werden.

Bei dem erfindungsgemäßen Verfahren ist mindestens eine Art der korrosionsschützenden beweglichen Anionen vorzugsweise mindestens eine auf Basis von Titanat oder/und Zirkonat, besonders bevorzugt mindestens ein Anion auf Basis von Titankomplexfluorid oder/und Zirkoniumkomplexfluorid, jeweils als MeF₄ oder/und MeF₆, wobei auch andere stöchiometrische Verhältnisse auftreten können.

Bei dem erfindungsgemäßen Verfahren wird als die mindestens eine Art der korrosionsinhibierenden bzw. haftvermittelnden Anionen vorzugsweise ein Gemisch eingesetzt, besonders bevorzugt eines auf Basis von mindestens einem der oben genannten korrosionsschützenden beweglichen Anionen und Phosphonat, Silan, Siloxan, Polysiloxan oder/und Tensid, insbesondere mit mindestens einem, Titanat oder/und Zirkonat.

Vorzugsweise wird ein Zusatz an mindestens einem beweglichen korrosionsschützenden Anion in der Höhe von 1 bis 33 mol% in Bezug auf die Gehalte an Polymer-Einheit gewählt, vorzugsweise von 5 bis 33 mol%. Diese Zugabemengen entsprechen den Dotierungsgraden der leitfähigen Polymere. Andererseits können diese Anionen auch im Überschuss zugesetzt werden.

Mindestens eine Art Anionen kann insbesondere danach ausgewählt werden/sein, dass diese Anionen in Wasser, in mindestens einem anderen polaren Lösemittel oder/und in einem auch mindestens ein nicht-polares Lösemittel enthaltenden Gemisch beweglich sind.

Neben dem mindestens einen beweglichen korrosionsschützenden Anion kann jedoch auch mindestens ein Anion ohne Korrosionsschutzwirkung oder/und ohne die Fähigkeit, in die Struktur eingebaut werden zu können oder/und aus der Struktur herauswandern zu können, anwesend sein. Der Anteil derartiger Anionen sollte jedoch im Vergleich zu den sogenannten beweglichen korrosionsschützenden Anionen oft vorzugsweise nicht zu groß sein. Mit dem Oxidationsmittel, das oft für die Oxidation der Edukte zu leitfähigen Polymeren benötigt wird, wird teilweise auch ein weiteres Anion eingebracht wie z.B. bei dem Oxidationsmittel Peroxodisulfat. Wenn jedoch als Oxidationsmittel z.B. H₂O₂ und Fe^{2+/3+}-Salz verwendet wird, wird kein zusätzliches Anion eingebracht, wenn das Fe^{2+/3+}-Salz in katalytischen Mengen von meistens weniger als 10⁻⁴ Mol/L zugesetzt wird. Der Anteil der Anionen, der zu den beweglichen korrosionsschützenden Anionen gehört, sollte in vielen Ausführungsvarianten möglichst hoch gewählt werden, um eine hohe Korrosionsschutzwirkung zu erzielen.

Bei dem erfindungsgemäßen Verfahren werden insbesondere alle Arten von beweglichen korrosionsschützenden Anionen vorzugsweise so ausgewählt, dass diese Anionen nicht zu groß sind, um die Mobilität dieser Anionen im leitfähigen Polymer und in benachbarten Substanzen nicht zu beeinträchtigen. Vorzugsweise wird ein Anion gewählt, das kleiner ist als insbesondere Polystyrolsulfonat, weil letzteres für die Beweglichkeit in der Regel zu groß ist und dann nur als fest eingebautes Anion genutzt werden kann.

Vorzugsweise wird das mindestens eine bewegliche korrosionsschützende Anion einen Durchmesser aufweisen, der nicht größer ist als die mittlere Porengröße des Porensystems des leitfähigen Polymers, wobei dieser Durchmesser vorzugsweise um mindestens 8 % kleiner oder sogar um mindestens 15 % kleiner ist als die mittlere Porengröße des Porensystems. Hierbei kann das Anion durch einen sehr hohen Anteil an Poren wie z.B. Porenkanälen insbesondere im leitfähigen Polymer beweglich sein und kann dadurch u.U. schneller wandern oder überhaupt erst wandern. Ein Anion, das sehr viel kleiner ist als die mittlere Porengröße des Porensystems kann auch mit höherer Wahrscheinlichkeit ungehindert oder wenig gehindert durch das Porensystem wandern, wenn eine Potenzialdifferenz durch den Gradienten der Differenz des Redoxpotenzials des leitfähigen Polymers und dem Korrosionspotenzial des korrodierenden Metalls vorliegt.

Wenn bei dem erfindungsgemäßen Verfahren Bindemittel-reiche Beschichtungen hergestellt werden, sollte das bewegliche korrosionsschützende Anion eine so geringe Größe haben, dass seine Beweglichkeit auch in den übrigen Bestandteilen der Beschichtung nicht oder nicht wesentlich behindert wird. Diese Anionen wandern bei einem korrosiven Angriff zum gestörten Bereich, der fast immer ein geringeres Potenzial als die intakte Grenzfläche aufweist.

Vorzugsweise wird das mindestens eine bewegliche korrosionsschützende Anion ausgewählt aus Anionen auf Basis von Zirkonium-haltigen Säuren, deren Salzen, deren Estern und deren Gemischen.

Vorzugsweise wird das mindestens eine Anion ausgewählt aus Anionen auf Basis von Hexafluorotitansäure, Hexafluorozirkonsäure, deren Salzen, deren Estern und deren Gemischen.

Vielfach wird die elektrische Leitfähigkeit der auszubildenden Beschichtung erhöht durch den Zusatz des mindestens einen beweglichen korrosionsschützenden Anions, das verschiedene Wertigkeitsstufen annehmen kann und das leicht in andere Wertigkeitsstufen wechselt.

Es können auch Anionen eingebaut werden, die einen Wertigkeitswechsel oder/und einen Ligandenaustausch (Koordinationswechsel) im gestörten Bereich erfahren wie z.B. ein Ligandenaustausch bei Hexafluorotitanat oder/und Hexafluorozirkonat. Vorteilhafterweise ist hiermit auch ein Löslichkeitswechsel verbunden, der dazu führt, dass das ursprünglich lösliche Anion im gestörten Bereich ausfällt bzw. eine korrosionsschützende Schicht bildet. Der Wertigkeitswechsel kann als Oxidation oder Reduktion auftreten. Vorzugsweise sind derartige Schichten Oxidschichten oder/und Schichten schwerlöslicher Salze. Bei Verwendung von Hexafluorotitanat oder/und Hexafluorozirkonat hat es sich als vorteilhaft erwiesen, wenn dem Gemisch Flußsäure zugesetzt wird.

Es wurde jetzt in Experimenten ermittelt, dass das mindestens eine bewegliche korrosionsschützende Anion wie z.B. TiF₆²⁻, ZrF₆²⁻, einen Ligandenaustausch, Wertigkeits- oder/und Löslichkeitswechsel erfährt und eine oxidische schützende Schicht im Bereich des Defektes oder/und im Bereich der Delaminationsfront ausbildet. Derartige Anionen sind ebenso wie die meisten Komplexsalze besonders vorteilhaft.

In Delaminationsversuchen in N₂-Atmosphäre konnte jetzt nachgewiesen werden, dass Molybdat-Ionen tatsächlich Potenzial-getrieben aus leitfähigem Polymer auf Basis von Polypyrrol freigesetzt werden und zum Defekt wandern, wo das Molybdat mit XPS ermittelt wurde.

Bei dem erfindungsgemäßen Verfahren ist mindestens eine Art der haftvermittelnden Anionen vorzugsweise mindestens eine auf Basis von Phosphor enthaltenden Oxyanionen wie z.B. Phosphonat, Silan, Siloxan, Polysiloxan oder/und Tensid.

Besonders bevorzugt ist es, Anionen auszuwählen, die analog zu Chromat schützende Substanzen bilden, die den gestörten Bereich - zumindest teilweise - sowohl anodisch, als auch kathodisch schützen. Hierbei werden Anionen bevorzugt ausgewählt, die einen Wertigkeitswechsel erfahren können oder/und komplexe Anionen, die zerfallen können.

Besonders vorteilhaft werden auch Anionen von Nebengruppenelementen mit höheren Oxidationsstufen wie z.B. 4+ oder 6+ zugesetzt, insbesondere Oxyanionen. Diese können eine besonders hohe korrosionsschützende Wirkung auf einer zu schützenden metallischen Oberfläche entfalten, wenn diese mit einer organischen Beschichtung versehen wird, die leitfähig beschichtete Partikel enthält.

Bei korrosionsschützenden Anionen ist es vorteilhaft, wenn diese mit den im gestörten Bereich vorhandenen Kationen wie z.B. den aus der metallischen Oberfläche bei der Korrosion herausgelösten Kationen eine möglichst dichte, möglichst geschlossene Passivierungsschicht auf der metallischen Oberfläche bilden, wobei die mindestens eine gebildete Substanz der Passivierungsschicht nicht ionenleitend ist und bei dem an der Grenzfläche genutzten pH-Wertbereich stabil ist. Diese Substanzen können beispielsweise Oxide, Hydroxide und Phosphate bzw. deren Gemische sein.

Oft wird die elektrische Leitfähigkeit der auszubildenden Beschichtung erhöht durch eine Erhöhung der Konzentration des mindestens einen beweglichen korrosionsschützenden Anions im leitfähigen Polymer. Vorzugsweise beträgt das Verhältnis des Gehalts an dem mindestens einen Anion eingebaut im leitfähigen Polymer zum Gehalt an Edukt(en) (= Dotierungsgrad) mindestens 1 Mol %, vorzugsweise mindestens 5 Mol %, besonders bevorzugt mindestens 10 Mol %, ganz besonders bevorzugt mindestens 15 Mol %, insbesondere mindestens 20 Mol %. Theoretisch wären 50 Mol% erreichbar, werden aber in der Praxis offenbar nicht erzielt.

### Oxidationsmittel:

Oxidationsmittel haben im Edukt-Gemisch die Aufgabe, den z.B. nach einem kationisch-radikalischen Mechanismus stattfindenden Kettenaufbau zu starten und trotz Verbrauch aufrechtzuerhalten. Daher sind Oxidationsmittel dem Edukt-Gemisch in der Regel vorzugsweise über die Gehalte von 33 mol% hinaus überzudosieren. Für die Umsetzung des mindestens einen Edukts zu mindestens einem Produkt sind Anionen für die Elektroneutralität des leitfähigen Polymers und gegebenenfalls Oxidationsmittel für die Polymerisation erforderlich. Vorzugsweise wird mindestens ein Oxidationsmittel zugesetzt, insbesondere dann, wenn nicht mindestens ein Anion auch gleichzeitig als Oxidationsmittel bei der chemischen Polymerisation wirkt oder/und soweit nicht elektrochemisch oder/und photochemisch polymerisiert wird.

Das Oxidationsmittel kann mindestens eines sein auf Basis von H₂O₂ wie z.B. Bariumperoxid, Peressigsäure, Perbenzoesäure, Permangansäure, Peroxomonoschwefelsäure, Peroxodischwefelsäure, Lewis-Säure, Molybdänsäure, Niobsäure, Tantalsäure, Titansäure, Wölframsäure, Zirkoniumsäure, Yttrium-haltiger Säure, Lanthanid-haltiger Säure, Fe³⁺-haltiger Säure, Cu²⁺-haltiger Säure, deren Salzen, deren Estern oder/und deren Gemischen.

Als Oxidationsmittel kann beispielsweise mindestens eine Verbindung auf Basis von Säure(n), deren Salz(e) in mehreren Wertigkeitsstufen vorliegen kann/können wie z.B. Eisensalz(e), auf Basis von Peroxid(en) oder/und Persäure(n) wie z.B. Peroxodisulfat eingesetzt werden.

Bei Oxidationsmitteln, die mehrere Wertigkeiten annehmen können und diese mehr oder minder leicht wechseln können, ist oft ein geeigneter, meist etwas niedrigerer oder mittlerer pH-Wert zu wählen. Die pH-Werte liegen in vielen Fällen dann im Bereich von 2 bis 6, insbesondere im Bereich von 2 bis 4 oder von 3 bis 5. Außerdem ist es wichtig, darauf zu achten, dass das Oxidationspotenzial des Oxidationsmittels höher ist als das Oxidationspotenzial des zu oxidierenden Eduktes oder dass es zu diesem zumindest gleich groß ist.

Vorzugsweise sind die leitfähige Polymere enthaltenden Partikel, die der erfindungsgemäßen Zusammensetzung zugesetzt werden, frei oder im Wesentlichen frei von Oxidationsmitteln.

### Partikel als Kerne zur Herstellung von Core-Shell-Partikeln:

Die Zusammensetzung, die Gehalte und der Aufbau der organischen oder/und anorganischen Partikel können in weiten Bereichen variieren.

Die mittlere Größe der Partikel ist im Bereich bis hinab zu 0,1 µm mittlerer Größe im Rasterelektronenmikroskop bei geeigneter Präparation unter getrennter Bewertung und Zählung der Einzelteile von Agglomeraten und unter Bewertung und Zählung von Aggregaten als ein großes Einzelteilchen zu zählen, während die mittlere Größe im Partikelgrößenbereich von 5 nm bis kleiner 0,1 µm mit einem Laserdoppleranemometer des Typs Zeta-Sizer der Fa. Malvern Instruments bestimmt werden soll, während bei noch kleineren mittleren Partikelgrößen die Elektronenbeugung zur Ermittlung bevorzugt ist. Hierbei kann für die rasterelektronenmikroskopisch erfassten Teilchen näherungsweise erreicht werden, dass zerteilbare Agglomerate, die trennbare Einzelteilchen enthalten, als jeweils mehrere Einzelteilchen bewertet und gezählt werden, was in etwa der Wirkung einer schwachen Mahlung entsprechen kann.

Die Größe der organischen oder anorganischen Partikel sollte sich in der Regel während des Beschichtens nicht wesentlich verändern.

Die Partikel können gegebenenfalls vorbeschichtet, chemisch modifiziert oder/und physikalisch modifiziert sein. So kann beispielsweise bei SiO₂-Partikeln zwischen sauren und basischen, hydrophilen und hydrophoben Partikeln unterschieden werden.

Hierbei können die Partikel in mindestens einer Form vorliegen ausgewählt aus: Im wesentlichen in Form von Clustem, jeweils näherungsweise in Form von isometrischen, faserförmigen, nadelförmigen, plättchenförmigen, diskusförmigen oder/und knäuelförmigen Partikeln, als beschichtete oder/und gefüllte Partikel, als Hohlpartikel oder/und in schwammähnlichen Partikeln. Besonders bevorzugt sind jeweils im wesentlichen flächig oder linealförmig ausgebildete Barrierepartikel bzw. beschichtete Pigmente wie z.B. beschichtete Schichtsilicate.

Insbesondere bei anorganischen Clustern, Nanopartikeln oder kleinen Partikeln sowie solchen, die leitfähige Polymere enthalten, ist es vorteilhaft, die Agglomerationsneigung durch geeignete Maßnahmen wie z.B. Zusatz von Pyrophosphat zu einer wässerigen Dispersion zu unterdrücken und gut zu dispergieren.

Insbesondere die anorganischen Partikel können bei Bedarf vor dem Versetzen mit einer Flüssigkeit oder vor dem Zusetzen zu dem Gemisch für die Umsetzung zu leitfähigen Polymeren oder zu der Zusammensetzung für die Beschichtung metallischer Oberflächen im weitgehend oder gänzlich trockenen Zustand oder in einer flüssigen Dispersion gemahlen, getrocknet, geglüht oder/und redispergiert werden.

Die Schichtdicke der Schicht des leitfähigen Polymers auf den Partikeln kann in breiten Bereichen variiert werden. Vorzugsweise sind die Schichtdicken oder/und die Partien im Inneren der Partikel im Bereich von 1 bis 200 nm, besonders bevorzugt im Bereich von 2 bis 100 nm, vor allem im Bereich von 1 bis 40 oder von 3 bis 80 nm. Diese Schichten werden unter Umständen bei anorganischen Partikeln dünner als bei organischen Partikeln hergestellt. Dickere Schichten sind zwar grundsätzlich denkbar und möglich, könnten aber ihre Grenzen finden, wenn die beschichteten Partikel nicht mehr dispergiert werden können. Die Schichtdicke dieser Hüllen ist insbesondere abhängig von der Reaktionszeit, der Konzentration der Edukte und den zur Verfügung stehenden Grenzflächen zwischen Partikeln und flüssigen Komponenten des Edukt-Gemisches.

Vorteilhafterweise werden beschichtete anorganische Partikel jedoch oft anders als beschichtete organische Partikel vor dem Mischen mit der Bindemittel-haltigen Matrix redispergiert, insbesondere, wenn Agglomerate oder/und Aggregate vorliegen. Anorganische Partikel als Kerne zur Umhüllung mit leitfähigen Polymeren bieten sich andererseits an, weil sie auf einfache Weise z.B. in eine organische Zusammensetzung wie z.B. einen Lack u.a. durch Mischen oder/und leichtes Mahlen eingebracht werden können.

In einem erfindungsgemäßen Gemisch oder in einer Zusammensetzung zum Beschichten metallischer Oberflächen mit Partikeln kann sich jeweils mindestens eine der folgenden Arten an leitfähiges Polymer enthaltenden Partikel befinden:
1.) Typische Core-Shell-Partikel (beschichtete Partikel), die teilweise oder vollständig mit leitfähigem Polymer beschichtet sind, wobei es sich hierbei häufig um anorganische beschichtete Partikel handelt,
2.) Partikel, die zumindest teilweise im Inneren oder auch im Inneren Ieitfähiges Polymer enthalten, wobei es sich hierbei häufig um organische Partikel handelt, die oft zusammen mit dem leitfähigen Polymer hergestellt worden sind,
3.) leitfähiges Polymer, das beliebig geformt bzw. hergestellt sein kann, das partikulär vorliegt und gegebenenfalls separat oder/und ausnahmsweise nicht um einen Partikelkern herum gebildet worden ist, also nicht als Beschichtung auf Partikeln ausgebildet worden ist; gegebenenfalls kann leitfähiges Polymer auch in den Partikeln, die zu beschichten sind, auftreten, insbesondere auch dann, wenn diese noch wachsen, miteinander zusammenwachsen oder/und ausheilen,
4.) sogenannte "Haftvermittler-Partikel" aus leitfähigem Polymer, das mindestens eine Haftung vermittelnde chemische Gruppe am Molekül wie z.B. eine Phosphonat-Gruppe aufweist,
5.) Bruchstücke a) von Partikelhüllen aus leitfähigem Polymer oder/und b) von leitfähiges Polymer enthaltenden Partikeln oder/und
6.) separat ohne Partikelkeme entstandene, leitfähiges Polymer enthaltende Partikel, die im Wesentlichen oder gänzlich aus leitfähigem Polymer bestehen.

Alle solche Partikel können gegebenenfalls auch in die erfindungsgemäße Beschichtung eingebaut werden. Sie alle werden im Sinne dieser Anmeldung unter dem Begriff "beschichtete Partikel" oder "leitfähiges Polymer enthaltende Partikel" zusammengefasst. Der Gehalt dieser einzelnen Partikelarten kann vergleichsweise klein oder groß sein. Die Aussagen zum Beschichtungsverfahren gelten in entsprechender Weise auch für alle diese anderen Varianten "beschichteter Partikel".

### Organische Partikel:

Bei dem Material der organischen Partikel wird unter "Polymer" mindestens ein Polymer ausgewählt aus Homopolymer(en), Copolymer(en), Blockcopolymer(en) oder/und Pfropfcopolymer(en) verstanden. Diese Polymere können aus dispergierbaren oder/und nichtdispergierbaren Partikeln bestehen. Diese Partikel können als Kerne für Core-Shell-Partikel verwendet werden. Insbesondere bei der Präparation der organischen Partikel kann es dazu kommen, dass das leitfähige Polymer teilweise, weitgehend oder vollständig im Inneren dieser Partikel eingelagert wird, wobei auch derartige Partikel hier als "beschichtete Partikel" und als Core-Shell-Partikel im Sinne dieser Anmeldung angesehen werden.

Insbesondere bestehen die organischen Polymere im wesentlichen aus folgenden Polymeren:

Die leitfähiges Polymer enthaltenden organischen Partikel sind vorzugsweise vorwiegend oder gänzlich solche, die ausgewählt sind aus der Gruppe bestehend aus Polymeren auf der Basis von Styrol, Acrylat, Methacrylat, Polycarbonat, Cellulose, Polyepoxid, Polyimid, Polyether, Polyurethan, Siloxan, Polysiloxan, Polysilan und Polysilazan.
1. Polymer auf der Basis von Styrol, Acrylat oder/und Methacrylat, letztere beide Varianten im Folgenden (Meth)acrylat genannt. Sie können insbesondere im wesentlichen aus (Meth)Acrylat(en) ausgewählt aus (Meth)Acrylat, Butyl(meth)acrylat, Hydroxy(meth)alkylacrylat, Glycidyl(meth)acrylat und Ethylenglycol(meth)acrylat oder/und im wesentlichen aus Styrol oder/und im wesentlichen aus substituierten Styrolen jeweils unabhängig voneinander mit Substituenten wie z.B. Hydroxid, Alkyl, Alkoxyl oder/und Sulfonat bestehen.
2. Polymer auf der Basis von Polycarbonat: Sie können insbesondere im wesentlichen aus organischem/en Carbonat(en) basierend auf Bisphenol A, B, C, F oder/und Z und gegebenenfalls beispielsweise substituiert mit Alkyl, Alkoxy oder/und Aryl bestehen.
3. Polymer auf der Basis von Cellulose: Sie können insbesondere im wesentlichen aus Cellulose(n) ausgewählt aus Alkylcellulose und Hydroxyalkylcellulose bestehen, gegebenenfalls substituiert mit Substituenten wie z.B. Hydroxid, Alkyl, Alkoxy, Carboxylat oder/und Sulfonat.
4. Polymer auf der Basis von Polyepoxiden: Sie können insbesondere im wesentlichen aus Epoxid(en) ausgewählt aus unsubstituierten oder/und aus substituierten mit Substituenten wie z.B. Hydroxid, Alkyl, Alkoxyl oder/und Sulfonat bestehen.
5. Polymer auf der Basis von Polyolefinen: Sie können insbesondere im wesentlichen aus Polyolefin(en) ausgewählt aus Ethylen(en), Propylen(en), Isobutylen, Butylen(en) und 4-Methylpenten oder/und aus mindestens einem substituierten Polyolefin mit Substituenten wie z.B. Alkyl, Amino oder/und Hydroxy bestehen.
6. Polymer auf der Basis von Polyimiden: Sie können insbesondere im wesentlichen aus Pol(imiden) ausgewählt aus unsubstituierten oder/und aus substituierten Poly(imiden) mit Substituenten wie z.B. Hydroxid, Alkyl, Alkoxyl oder/und Sulfonat bestehen.
7. Polymer auf der Basis von Polyethern: Sie können insbesondere im wesentlichen aus Epoxiden ausgewählt aus Ethylenoxid(en) und Propylenoxid(en) oder/und aus substituierten Epoxiden mit Substituenten wie z.B. Alkyl, Aryl, Amino oder/und Chlorid bestehen.
8. Polymer auf der Basis von Polyurethanen: Sie können insbesondere im wesentlichen aus Polyurethan(en) ausgewählt aus unsubstituierten oder/und aus substituierten Polyurethan(en) mit Substituenten wie z.B. Hydroxid, Alkyl, Alkoxyl oder/und Sulfonat bestehen. Sie können insbesondere über Diisocyanate und Diole bzw. über Diisocyanate und primäre/sekundäre Diamine hergestellt werden, wobei als Diole hydroxyterminierte Diole, Polyester, Polyether, Polycarbonate oder/und Oligo(meth)acrylate und als Diamine insbesondere Alkyldiamine mit n = 5 bis 12 eingesetzt werden können.
9. Polymer auf der Basis von Siloxanen oder/und Polysiloxanen, auch von Siliconen: Sie können insbesondere im wesentlichen aus unsubstituierten oder/und aus substituierten Siloxanen oder/und Polysiloxanen mit Substituenten wie z.B. Hydroxid, Alkyl, Alkoxyl, Amino, Mercapto oder/und Sulfonat bestehen.
10. Polymer auf der Basis von Polysilanen oder/und Polysilazanen: Sie können im wesentlichen aus unsubstituierten oder/und aus substituierten Polysilanen oder/und Polysilazanen mit Substituenten wie z.B. Hydroxid, Alkyl, Alkoxyl oder/und Sulfonat bestehen. Beispielsweise können sie im wesentlichen aus Poly(cyclohexy(methyl)silan(en), Poly(dihexyl)silan(en) oder/und Poly(phenylmethyl)silan(en) bzw. im wesentlichen aus Poly(1,2-dimethyl)silazan(en) oder/und Poly(1,1-dimethyl)silazan(en) bestehen.

Für die Beschichtung von organischen Partikeln bzw. ihre Herstellung zusammen mit der Herstellung von leitfähigem Polymer, so dass die daraus entstehenden organischen Partikel oft einen erhöhten Anteil an leitfähigem Polymer in ihrem Inneren aufweisen, sind jedoch insbesondere Kerne auf Basis von dispergierbaren organischen Polymeren wie z.B. Polyacrylaten, Polystyrolen, Polyurethanen oder/und Polysiloxanen geeignet. Diese Polymere können auch in einem Verfahren zur Beschichtung von organischem Polymer mit leitfähigem Polymer behandelt werden, bei dem zuerst - insbesondere in der gleichen Lösung bzw. Dispersion oder/und im gleichen Sol bzw. Gel - die organischen Partikel hergestellt werden und danach diese organischen Partikel erfindungsgemäß beschichtet werden oder bei dem die organischen Partikel und das leitfähige Polymer im wesentlichen gleichzeitig oder gleichzeitig hergestellt werden, so dass die hieraus entstehenden Partikel oft Einlagerungen von leitfähigem Polymer in ihrem Inneren und teilweise auch leitfähiges Polymer an ihrer Oberfläche aufweisen. Dieses Verfahren ist vorzugsweise ein Eintopfverfahren oder/und ein im wesentlichen kontinuierliches Verfahren. Die Herstellung der organischen Partikel beruht dabei vorzugsweise auf der Emulsionspolymerisation, insbesondere frei von Tensiden. Die Verfahren, Möglichkeiten und Produkte der Emulsionspolymerisation sind grundsätzlich bekannt. Diese emulsionspolymerisierten organischen Partikel liegen aufgrund der vorherigen Herstellung üblicherweise in einer stabilen Dispersion, vor.

Besonders vorteilhaft ist es in vielen Ausführungsformen, die organischen Partikel zusammen mit dem leitfähigen Polymer herzustellen. Hierbei ist es möglich, Partikel herzustellen mit definierten engen Partikelgrößenverteilungen, mit mono- oder bimodalen Partikelgrößenverteilungen oder/und Partikel, bei denen organisches Polymer und leitfähiges Polymer innig miteinander vermischt oder verwachsen sind. Hierbei können beispielsweise mono- oder bimodale Verteilungen im Bereich von 30 bis 400 nm Größe ausgebildet werden. Es können aber auch erst organische Partikel hergestellt werden, die anschließen oder erst in einer Spätphase mit leitfähigem Polymer beschichtet bzw. im oberflächennahen Bereich vermischt werden.

Bei der Herstellung von organischen Partikeln ist darauf zu achten, dass die Ausbildung der Micellen nicht stärker beeinträchtigt wird, was insbesondere durch ein ungeeignetes Oxidationsmittel, durch zu hohe Gehalte an Ionen oder/und durch zu starkes Rühren möglich ist. Denn die organischen Partikel bilden sich hierbei in vielen Ausführungsformen aus Micellen. Auch hier ist auf die chemische Verträglichkeit der zuzusetzenden Komponenten zu achten. Die Polymerisation kann auch hier chemisch, elektrochemisch oder/und photochemisch erfolgen.

Grundsätzlich ist eine Beschichtung von allen Arten organischer Partikel nach mindestens einem Beschichtungsverfahren mit leitfähigen Polymeren möglich, gegebenenfalls durch Verkapselung schlecht oder nicht dispergierbarer Partikel. Dispergierbar im Sinne dieses Textabschnittes bedeutet dabei die Möglichkeit, eine stabile Dispersion der organischen Partikel in einer Lösung bzw. Dispersion oder/und in einem Sol bzw. Gel zu haben, so dass im wesentlichen keine Agglomerationen auftreten.

### Anorganische Partikel:

Vorzugsweise bestehen die anorganischen Partikel im wesentlichen aus mindestens einer anorganischen Substanz, insbesondere im wesentlichen aus jeweils mindestens einem Borid, Carbid, Carbonat, Cuprat, Ferrat, Fluorid, Fluorosilicat, Niobat, Nitrid, Oxid, Phosphat, Phosphid, Phosphosilicat, Selenid, Silicat, Aluminium-haltigen Silicat, Sulfat, Sulfid, Tellurid, Titanat, Zirkonat, aus mindestens einer Art von Kohlenstoff, aus mindestens einem Gesteinsmehl, aus mindestens einem Pulver von Glas, Fritte, glasartigem Material, amorphem Material oder/und Verbundmaterial, aus mindestens einer Legierung oder/und aus mindestens einem Metall - soweit die Legierung oder/und das Metall nicht bereits bei der Herstellung des leitfähigen Polymers korrodiert und kein Lokalelement bildet - oder/und deren Mischkristallen, deren Verwachsungen oder/und deren Gemischen.

Die anorganischen Partikel können im wesentlichen aus mindestens einer Substanz, insbesondere im wesentlichen aus jeweils mindestens einem Erdalkalicarbonat, Erdalkalititanat, Erdalkalizirkonat, SiO₂, Silicat wie z.B. Aluminium-haltigen Silicat, Glimmer, Tonmineral, Zeolith, schwerlöslichen Sulfat wie Bariumsulfat oder Calciumsulfathydrat, aus Flakes z.B. auf Basis von SiO₂ oder/und Silicat(en), aus Oxid(en) mit einem Gehalt an Aluminium, Eisen, Kalzium, Kupfer, Magnesium, Titan, Zink, Zinn oder/und Zirkonium bestehen.

Besonders feinkörnige Partikel können beispielsweise über ein Sol oder/und ein Gel wie z.B. ein Kieselsol hergestellt werden. Der Vorteil der Beschichtung eines Sols liegt in der hohen Beweglichkeit der Komponenten trotz hoher Konzentrationen. Derartige Partikel haben oft eine mittlere Partikelgröße im Bereich von 10 bis 120 nm. Aufgrund der Feinkörnigkeit der dabei gebildeten Partikel ergibt sich insbesondere bei dünner Beschichtung mit einer Hülle eine besonders gleichmäßige Verteilung der leitfähigen Polymere.

Gegebenenfalls kann es auch bei der Präparation derartiger anorganischer Partikel dazu kommen, dass das leitfähige Polymer teilweise, weitgehend oder vollständig im Inneren dieser Partikel eingelagert wird, wobei auch derartige Partikel hier als "beschichtete Partikel" und als Core-Shell-Partikel im Sinne dieser Anmeldung angesehen werden.

In manchen Ausführungsformen sind engere Partikelgrößenverteilungen, als sie oft bei anorganischen Partikeln auftreten, besonders bevorzugt. Diese können z.B. durch Mischen verschiedener Verteilungen, durch Sieben bzw. Sichten oder durch Mahlen erzeugt werden.

Besonders bevorzugt sind anorganische Partikel, die im wesentlichen plättchenförmig, im wesentlichen linealförmig oder/und im wesentlichen nadelförmig ausgebildet sind. Damit können sie auch stärker als Barrierepartikel wirken.

Anorganische Partikel können teilweise auch in einer stabilen Dispersion vorliegen, insbesondere abhängig von Partikelgröße, Konzentration, Dichte, Elektrolytgehalt usw..

### Monomere/Olinomere zur Herstellung von leitfähigem Polymer:

Zur Ausbildung der leitfähigen Polymere ist ein Zusatz von Monomeren oder/und Oligomeren zu dem Edukt-Gemisch erforderlich, die geeignet sind, zu leitfähigen Polymeren umgesetzt werden zu können. Die Monomere oder/und Oligomere werden als "Edukt(e)" bezeichnet.

Besonders bevorzugt ist ein Zusatz von unsubstituierten bzw. substituierten Verbindungen auf Basis von Pyrrol oder/und Thiophen.

Generell kann die Substitution der Monomere oder/und Oligomere bzw. der daraus entstehenden/entstandenen Oligomere, Polymere, Copolymere, Blockcopolymere oder/und Pfropfcopolymere insbesondere durch Wasserstoff (H), Hydroxyl (OH), Halogen (Br/Cl/F), Alkoxy (O-Alkyl), Alkyl (CₓH_{y}), Carboxy (COH), Carboxylat (COOH), Amin (NH₂), Amino (NH₃), Amid (CONH₂), primäres Ammonium (NRH₃⁺), Imin (NH), Imid (COHNH), Phosphonat (PO₃H₂), Diphosphonat, Mercapto- (SH), Sulfon (SO₂H), Sulfonat (SO₃H), Aryl ((C₆H₅)ₙ) oder/und unverzweigten bzw. verzweigten Alkylketten ohne oder mit weiteren Substituenten erfolgen bzw. erfolgt sein, wobei die Substituenten vorzugsweise nicht zu groß sein sollten.

Vorzugsweise wird/werden dem Gemisch Edukt(e) zur Herstellung des leitfähigen Polymers zugesetzt, bei dem mindestens ein Edukt eine lockerere Molekülstruktur aufweist oder/und bei dem mindestens eines der gebildeten leitfähigen Polymere eine lockerere Molekülstruktur aufweist, insbesondere so, dass dies zu einer größeren mittleren Porengröße (oft als Molekülkanalgröße) des Porensystems des leitfähigen Polymers führt.

Vorzugsweise wird dies erreicht durch Verwendung mindestens eines Eduktes mit mindestens einer eingebauten Seitenkette wie z.B. einer Alkylkette von mindestens 1 C-Atom wie z.B. beim Einbau einer CH₃-Gruppe oder insbesondere von mindestens 2 oder mindestens 4 C-Atomen oder/und mindestens eines Ringsystems, das insbesondere mit organischen Gruppen gebildet wird wie z.B. durch Ankondensieren einer Brücke eines Ethers, der ein Ringsystem bildet.

Das mindestens eine Edukt kann insbesondere ausgewählt werden aus unsubstituierten oder/und substituierten Verbindungen auf der Basis von Pyrrol oder/und Thiophen, unter den unsubstituierten Edukten wird insbesondere Pyrrol bevorzugt. Ganz besonders bevorzugt sind unsubstituierte bzw. substituierte Verbindungen ausgewählt aus Monomeren oder/und Oligomeren auf Basis von Bithiophenen, Terthiophenen, Alkylthiophenen wie z.B. Methylthiophen oder/und Ethylthiophen, Ethylendioxythiophen, Alkylpyrrolen wie z.B. Methylpyrrol oder/und Ethylpyrrol. Besonders bevorzugt sind Edukte, aus denen substituierte dendritische oder/und leiterartige Polymere hergestellt werden können. Gegebenenfalls wird auch mindestens ein Edukt vorher gesondert hergestellt oder/und der Zusammensetzung zur Beschichtung metallischer Oberflächen in seltenen Fällen zugesetzt. Üblicherweise wird jedoch dieser Zusammensetzung mindestens eine Depotsubstanz zugesetzt, jedoch meistens frei oder im wesentlichen frei von Edukt(en).

Unter den substituierten Edukten wird besonders bevorzugt mindestens eine Verbindung ausgewählt aus 1-Alkylpyrrolen insbesondere mit 1 bis 16 C-Atomen, 1-Alkoxypyrrolen insbesondere mit 1 bis 16 C-Atomen, 3-Alkylpyrrolen insbesondere mit 1 bis 16 C-Atomen, 3-Alkoxypyrrolen insbesondere mit 1 bis 16 C-Atomen, 3,4-Dialkylpyrrolen insbesondere mit 1 bis 16 C-Atomen, 3,4-Dialkoxypyrrolen insbesondere mit 1 bis 16 C-Atomen, 1,3,4-Trialkylpyrrolen insbesondere mit 1 bis 16 C-Atomen, 1,3,4-Trialkoxypyrrolen insbesondere mit 1 bis 16 C-Atomen, 1-Arylpyrrolen, 3-Arylpyrrolen, 1-Aryl-3-alkylpyrrolen insbesondere mit 1 bis 16 C-Atomen, 1-Aryl-3-alkoxypyrrolen insbesondere mit 1 bis 16 C-Atomen, 1-Aryl-3,4-Dialkylpyrrolen insbesondere mit 1 bis 16 C-Atomen, 1-Aryl-3,4-Dialkoxypyrrolen insbesondere mit 1 bis 16 C-Atomen, 3-Alkylthiophenen insbesondere mit 1 bis 16 C-Atomen, 3-Alkoxythiophenen insbesondere mit 1 bis 16 C-Atomen, 3,4-Dialkylthiophenen insbesondere mit 1 bis 16 C-Atomen, 3,4-Dialkoxythiophenen insbesondere mit 1 bis 16 C-Atomen, 3,4-Ethylendioxythiophenen und deren Derivaten. Hierbei kann mindestens eine Verbindung ausgewählt werden auf Basis von Pyrrol-1-ylalkylphosphonsäure insbesondere mit 1 bis 16 C-Atomen, Pyrrol-1-ylalkylphosphorsäure insbesondere mit 1 bis 16 C-Atomen, Pyrrol-3-ylalkylphosphonsäure insbesondere mit 1 bis 16 C-Atomen, Pyrrol-3-ylalkylphosphorsäure insbesondere mit 1 bis 16 C-Atomen, 5-Alkyl-3,4-ethylendioxythiophen insbesondere mit 1 bis 12 C-Atomen, 5-(w-Phosphono)alkyl-3,4-ethylendioxythiophen und deren Derivaten, insbesondere mit 1 bis 12 C-Atomen, die hergestellt, als Basis für die Herstellung der Depotsubstanz verwendet bzw. der Zusammensetzung zugesetzt werden. Die Zahl der C-Atome kann jeweils unabhängig voneinander bei 1, 2, 3, 4, 5, 6, 7, 8, 9, 10, 11, 12, 13, 14, 15 oder/und 16 liegen.

Unter den substituierten Edukten wird ganz besonders bevorzugt mindestens eine Verbindung ausgewählt aus 1-Methylpyrrol, 1-Ethylpyrrol, Pyrrol-1-ylalkylphosphonsäure insbesondere mit 10 oder/und 12 C-Atomen, Pyrrol-1-ylalkylphosphat insbesondere mit 12 C-Atomen, 1-Methoxypyrrol, 1-Ethoxypyrrol, Pyrrol-3-ylalkylphosphonsäure insbesondere mit 6, 8 oder/und 11 C-Atomen, 3-Methoxypyrrol, 3-Ethoxypyrrol, 3,4-Dimethylpyrrol, 3,4-Dimethoxypyrrol, 1,3,4-Trimethylpyrrol, 1,3,4-Trimethoxypyrrol, 1-Phenylpyrrol, 3-Phenylpyrrol, 1-Phenyl-3-methylpyrrol, 1-Phenyl-3-methoxypyrrol, 1-Phenyl-3,4-dimethylpyrrol, 1-Phenyl-3,4-dimethoxypyrrol, 3-Methylthiophen, 3-Ethylthiophen, 3-Hexylthiophen, 3-Octylthiophen, 3-Methoxythiophen, 3-Ethoxythiophen, 3-Hexoxythiophen, 3-Octoxythiophen, 3,4-Dimethylthiophen, 3,4-Dimethoxythiophen, 5-(-(ω-Phosphono)methyl-3,4-dioxythiophen und deren Derivaten hergestellt, als Basis für die Herstellung der Depotsubstanz verwendet bzw. der Zusammensetzung zugesetzt.

Insbesondere wird mindestens eine Verbindung ausgewählt aus Ethylthiophen, Ethylendioxythiophen, Methylthiophen, 3-Ethylpyrrol, 3-Methylpyrrol, N-Ethylpyrrol, N-Methylpyrrol, 3-Phenylpyrrol und deren Derivaten hergestellt, als Basis für die Herstellung der Depotsubstanz verwendet bzw. der Zusammensetzung zugesetzt.

Durch nukleophilen Angriff können die leitfähigen Polymere der erfindungsgemäß beschichteten Partikel bzw. die Partikel mit einem Anteil an leitfähigem Polymer chemisch angegriffen werden, wenn der pH-Wert für sie nicht geeignet ist. Vorteilhafterweise werden daher Edukte mit mindestens einem Substituenten wie z.B. Alkoxy oder/und Alkyl insbesondere in 3- oder/und 4-Position verwendet, die leüfähige Polymere bilden, die nicht durch nukleophilen Angriff bzw. Deaktivierung beeinträchtigt werden können, was zu einer Beeinträchtigung der elektrischen Leitfähigkeit führen kann. Dies können insbesondere Edukte auf Basis von Heterocyclen mit mindestens einer Alkylkette oder/und mit mindestens einem Ringsystem sein. Weiterhin sind derartige Edukte auch deswegen vorteilhaft, weil die Vernetzbarkeit dadurch in vorteilhafter Weise eingeschränkt ist und weil die hieraus entstehenden leitfähigen Polymere meistens Porensysteme mit besonders großen Porenkanälen aufweisen. Ganz besonders bevorzugt sind Verbindungen, deren Monomere oder/und Oligomere zumindest teilweise in Wasser gelöst oder/und polymerisiert werden können. Insbesondere vorteilhaft sind solche, die zumindest teilweise oder zeitweilig in Wasser oder Wasser enthaltenden Lösemittelgemischen polymerisierbar sind.

Ebenfalls ist es bevorzugt, dem Gemisch zur Herstellung des leitfähigen Polymers mindestens ein Edukt zuzusetzen, das wasserlöslich ist und das vorzugsweise nach seiner Oxidation (= Polymerisation) nicht mehr oder nur noch gering wasserlöslich ist.

Monomere werden u.a. deswegen verwendet, weil sie preisgünstiger sein können bzw. eine höhere Löslichkeit und höhere Diffusionskoeffizienten aufweisen können. Oligomere werden insbesondere dann verwendet, wenn das entsprechende Monomer nicht zu polymerisieren ist und wenn nur das Oligomer polymerisiert werden kann. Oligomere können vielfach reaktiver sein als Monomere.

Edukte in der Form von Copolymeren oder/und Blockcopolymeren können gegebenenfalls bereits im Edukt-Gemisch zusätzlich zu den Monomeren/Oligomeren vorhanden sein, während Pfropfcopolymere üblicherweise erst durch weitere chemische Reaktion(en) mit mindestens einem weiteren organischen Bestandteil wie z.B. mit einer Carboxyl- oder/und Ester-Gruppe insbesondere auf dem Polymergerüst der Beschichtung gebildet werden.

Vorzugsweise wird mindestens ein Edukt zugesetzt, das nach seiner Polymerisation zum leitfähigen Polymer in einem breiten pH-Wertebereich chemisch stabil ist. Vorzugsweise ist dann bei dem gewählten pH-Wert auch das verwendete Oxidationsmittel stabil. Es ist bevorzugt, dass dieser pH-Wertebereich mindestens 1 oder mindestens 2 Einheiten umfasst, also z.B. pH-Werte im Bereich von 3 bis 4,5.

### Entstehende leitfähige Polymere:

Aus dem Zusatz eines Gehalts von Monomeren oder/und Oligomeren (Edukte), die zur Ausbildung von leitfähigen Polymeren geeignet sind, werden durch die Oxidation zumindest teilweise leitfähige Polymere (= Produkte, Depotsubstanz) gebildet. Wenn Oxidationsmittel zugesetzt wird, können aus Edukten oxidierte Edukte werden, die dann polymerisieren und an die sich weitere Gruppen anlagern können. Kleinere Oligomere, z.B. solche mit etwa n = 8, zeigen dabei kaum oder nicht die Wirkungen der leitfähigen Polymere. Die leitfähigen Polymere sind im reduzierten Zustand elektrisch neutral. Bei der Oxidation (= Polymerisation) der leitfähigen Polymere bilden sich Kationen, die entsprechend Anionen aufnehmen können. Der oxidierte Zustand kann chemisch mit mindestens einem Oxidationsmittel, elektrochemisch oder/und photochemisch eingestellt werden. Vorzugsweise wird keine Elektropolymerisation durchgeführt, sondern weitgehend nur chemisch oder/und photochemisch polymerisiert, insbesondere nur chemisch oder/und photochemisch. Besonders bevorzugt wird nur oder weitgehend nur chemisch gearbeitet.

Eine Depotsubstanz kann grundsätzlich chemisch, elektrochemisch oder/und photochemisch polymerisiert worden sein. Vorzugsweise wird die mindestens eine Depotsubstanz bzw. die sie enthaltende Zusammensetzung chemisch oder/und mechanisch insbesondere auf die Partikel oder auf die metallischen Oberflächen aufgebracht. Bei einer elektrochemischen Aufbringung müssen die vergleichsweise unedleren metallischen Oberflächen vorher passiviert werden, um die starke Auflösung der metallischen Substanzen zu unterbinden. Bei der elektrochemischen Aufbringung müssen daher immer korrosionsinhibierende Anionen der Lösung, aus der mindestens ein Edukt polymerisiert wird, zugesetzt sein oder zugesetzt werden, um zuerst immer eine Passivierungsschicht auszubilden. Das auf diese Weise gebildete leitfähige Polymer enthält damit automatisch korrosionsinhibierende Anionen, aber die Publikationen, die korrosionsinhibierende Anionen beschreiben, deuten offenbar nie eine Freisetzung dieser Anionen aufgrund einer Potenzialabsenkung an.

Bei der elektrochemischen Polymerisation müssen die Partikel oft ein negatives zeta-Potenzial aufweisen. Die Beschichtungen, die durch elektrochemische Polymerisation auf Partikeln hergestellt wurden, haben sich als von vergleichsweise schlechter Qualität erwiesen. Bei der photochemischen Polymerisation sind oft halbleitende Partikel erforderlich, die z.B. bei UV-Bestrahlung Defektelektronen freisetzen. Auch hier haben sich die Beschichtungen, die durch photochemische Polymerisation auf Partikeln hergestellt wurden, als von vergleichsweise schlechter Qualität erwiesen. Außerdem könnte die Polymerhülle bei UV-Bestrahlung beschädigt werden. Die im Vergleich hierzu besten Beschichtungen wurden jetzt durch chemische Polymerisation hergestellt.

Die leitfähigen Polymere haben eine Salz-artige Struktur, sodass bei Anionen-beladenen leitfähigen Polymeren von Salzen gesprochen werden kann.

Das mindestens eine Polymer, Copolymer, Blockcopolymer oder/und Pfropfcopolymer wird im Folgenden vereinfacht als "Polymer" oder als "leitfähiges Polymer bezeichnet. Bei dem erfindungsgemäßen Verfahren ist die mindestens eine Depotsubstanz vorzugsweise mindestens ein leitfähiges Polymer auf Basis von Pyrrol oder/und Thiophen. Vorzugsweise werden leitfähige Polymere gebildet auf Basis von Polypyrrol, oder/und Polythiophen bzw. solche, die zumindest teilweise oder zeitweilig in Wasser polymerisiert wurden. Zu den besonders bevorzugten leitfähigen Polymeren gehören beispielsweise solche auf Basis von Polypyrrol (PPy), Polythiophen (PTH). Die Depotsubstanz wird entweder getrennt oder in einem Gemisch vorab hergestellt und dann der Zusammensetzung zugesetzt oder/und in seltenen Fällen als Edukt der Zusammensetzung zugesetzt oder/und in der Zusammensetzung oder/und in der Beschichtung zur Depotsubstanz reagiert.

Bei dem erfindungsgemäßen Verfahren werden vorzugsweise mindestens eine Depotsubstanz und mindestens ein Anion ausgewählt, die eine weitgehende oder vollständige Freisetzung der Anionen aus der Depotsubstanz ermöglichen, wodurch die Kationentransportrate der Kationen insbesondere aus dem Elektrolyten oder/und aus dem Defekt deutlich erniedrigt werden kann, wodurch wiederum die Bildung von schädlichen Radikalen im Bereich der Grenzfläche Metall/Beschichtung verringert werden kann.

Vorzugsweise sind die erfindungsgemäß hergestellten bzw. genutzten leitfähigen Polymere im oxidierten (= dotierten) Zustand thermodynamisch so stabil, dass sie sich nicht von alleine - selbst über längere Zeit - entladen können und dass auch ihre Anionen nicht ohne Reduktion freigesetzt werden können. Dadurch unterscheiden sich dann diese chemischen Systeme von manchen anderen Depotsystemen, die keine leitfähigen Polymere sind, wo die Anionen die Depotsubstanz vorzeitig verlassen können.

Besonders bevorzugt ist es, mindestens ein Polymer herzustellen oder/und dem Gemisch zuzusetzen, das ausgewählt ist aus Verbindungen auf Basis von Poly(1-alkylpyrrol) (P1APy) insbesondere mit 1 bis 16 C-Atomen, Poly(1-alkoxypyrrol) (P1AOPy) insbesondere mit 1 bis 16 C-Atomen, Poly(3-alkylpyrrol) (P3APy) insbesondere mit 1 bis 16 C-Atomen, Poly(3-alkoxypyrrol) (P3AOPy) insbesondere mit 1 bis 16 C-Atomen, Poly(1-arylpyrrol) (P1ArPy), Poly(3-arylpyrrol) (P3ArPy), Poly(3-alkylthiophen) (P3ATH) insbesondere mit 1 bis 16 C-Atomen, Poly(3-alkoxythiophen) (P3ATH) insbesondere mit 1 bis 16 C-Atomen, Poly(3-arylthiophen) (P3ArTH), Poly(3-alkylbithiophen) insbesondere mit 1 bis 16 C-Atomen, Poly(3,3'-dialkylbithiophen), Poly(3,3'-dialkoxybithiophen), Poly(alkylterthiophen), Poly(alkoxyterthiophen), Poly(3,4-ethylenedioxythiophen) (PEDOT) und Poly(benzo[b]thiophen (PBTH).

Besonders bevorzugt ist es, mindestens ein Polymer herzustellen oder/und dem Gemisch zuzusetzen, das ausgewählt ist aus Poly(1-methylpyrrol) (P1MPy), Poly(1-methoxypyrrol) (P1MOPy), Poly(3-methylpyrrol) (P3Mpy), Poly(3-methoxypyrrol) (P3MOPy), Poly(1-phenylpyrrol) (P1PhPy), Poly(3-phenylpyrrol) (P3PhPy), Poly(3-methylthiophen), Poly(3-hexylthiophen), Poly(3-methoxythiophen), Poly(3-hexoxythiophen), Poly(3-phenylthiophen), Poly(3-methylbithiophen), Poly(3-hexylbithiophen), Poly(3,3'-dimethylbithiophen), Poly(3,3'-dihexylbithiophen), Poly(3,3'-dimethoxybithiophen), Poly-(3,3'-dihexoxybithiophen), Poly(3-methylterthiophen), Poly(3-methoxyterthiophen), Poly(5-alkyl-3,4-ethylendioxythiophen) insbesondere mit 1 bis 12 C-Atomen, Poly(3-hexylthiophen) (P3HT).

Zu den besonders bevorzugten leitfähigen Polymeren gehören unter anderem Polypyrrol (PPy), Poly(N-methylpyrrol) (PMPy), Poly(3-alkylpyrrol) (P3AlPy), Poly(3-arylpyrrol) (P3ArPy), Poly(3-alkylthiophen) (P3AIT), Poly(alkylbithiophen), Poly(alkylterthiophen), Poly(ethylendioxythiophen) (PEDOT), Poly(3-arylthiophen) (P3ArT), Poly(3-hexylthiophen) (P3HT), Poly(3-hexylthiophen) (P3HT), Polythiophen (PT), Poly(3-alkylthiophen) mit R = Alkyl wie z.B. Methyl, Butyl usw. (P3AT), Polypyrrol (PPy), Poly(ethylendioxythiophen) (PEDOT), sowie Poly(3-hexylthiophen) (P3HT).

Unter den Polymeren können auch Poly(1,3-Dialkylpyrrol), Poly(3,4-Dialkylpyrrol), Poly(3,4-Dialkylthiophen), Poly(1,3,4-Trialkylpyrrol), Poly(3,4-Dialkoxythiophen), Poly(1,3,4-Trialkoxypyrrol), Poly(2-Arylthiophen), jeweils unabhängig voneinander insbesonders mit 1 bis 16 C-Atomen, bzw. entsprechende Edukte gewählt werden. Unter den Aryl-Verbindungen können insbesondere 1-Phenyl-, 3-Phenyl-, 1-Biphenyl-, 3-Biphenyl-, 1-(4-Azobenzol)- oder/und 3-(4-Azobenzol)-Verbindungen ausgewählt werden.

Vorzugsweise werden hierbei Verbindungen unabhängig voneinander mit Alkylketten mit 1, 2, 3, 4, 5, 6, 7, 8, 9, 10, 11, 12, 13, 14, 15 oder/und 16 C-Atomen hergestellt bzw. verwendet.

Als Substituenten können bei den Edukten oder/und Polymeren jeweils unabhängig voneinander vorzugsweise H, OH, O, COOH, CH₂OH, OCH₃, CₙH₂ₙ₋₁ insbesondere mit n = 2 bis 12, OCₙH₂ₙ₋₁ insbesondere mit n = 2 bis 12, Alkyl, Alkoxy, Aryl, Amin, Amino, Amid, primäres Ammonium, Imino, Imid, Halogen, Carboxy, Carboxylat, Mercapto, Phosphonat, S, Sulfon oder/und Sulfonat gewählt werden.

Die leitfähigen Polymere, die sich hierfür eignen, sind zwar oft grundsätzlich bekannt, aber meistens noch nicht als für mindestens eine Variante des Korrosionsschutzes beschrieben; dort, wo der Korrosionsschutz für dieses Polymer beschrieben ist, funktioniert jedoch der Korrosionsschutz bei unedleren metallischen Oberflächen ohne bereits vorhandene Passivierungsschicht nicht. In einzelnen Ausführungsformen kann auch mindestens eine Depotsubstanz zumindest teilweise eine Matrix in der Zusammensetzung ausbilden, insbesondere nahe der Grenzfläche Metall/Beschichtung. Die wenigsten leitfähigen Polymere sind kommerziell erhältlich.

Es ist vorteilhaft, entweder ein durch Substituenten oder/und durch ein anderes Grundmolekül (Monomer/Oligomer) modifiziertes leitfähiges Polymer oder/und ein leitfähiges Copolymer enthaltend mindestens zwei verschiedene Grundmoleküle (Monomere/Oligomere) mit etwas unterschiedlichen Redoxpotenzialen einzusetzen, um die Redoxeigenschaften der Depotsubstanz von Verbindung zu Verbindung deutlich zu variieren. Alternativ oder zusätzlich können entsprechend unterschiedliche Depotsubstanzen miteinander vermischt werden. Hierdurch kann mindestens eine Verbindung ausgesucht werden, die das richtige Niveau des Redoxpotenzials für das chemische System einschließlich der metallischen Oberfläche aufweist, oder/und ein Gemisch hergestellt werden, das unterschiedliche leitfähige Polymere mit unterschiedlichen Redoxpotenzialen enthält. Das Redoxpotenzial der Depotsubstanz ist insbesondere dann geeignet, wenn es mindestens 75 mV, mindestens 100 mV oder mindestens 150 mV, bevorzugt mindestens 200 mV oder mindestens 250 mV, ganz besonders bevorzugt mindestens 300 mV oder mindestens 350 mV über dem Korrosionspotenzial der metallischen Oberfläche liegt.

Vorzugsweise wird die mittlere Porengröße des auszubildenden leitfähigen Oligomers, Polymers, Copolymers, Blockcopolymers oder/und Pfropfcopolymers vergrößert durch Einstellung einer höheren Temperatur bei der Bildung der Beschichtung oder/und bei der Trocknung des Gemisches, insbesondere auf eine Temperatur im Bereich von 60 bis 200 °C in inerter Atmosphäre, an Luft insbesondere im Bereich von 30 bis 80 °C.

### Lösemittel des Edukt- bzw. Produkt-Gemisches:

Wasser kann in manchen Ausführungsvarianten als einziges Lösemittel zur Herstellung des leitfähigen Polymers eingesetzt werden. Es ist vorteilhaft, Wasser als eines der Lösemittel in einem Lösemittelgemisch einzusetzen, wobei der Wassergehalt des Lösemittelgemisches mindestens 5 Gew.-% ausmacht. Dadurch kann einfacher und umweltfreundlicher gearbeitet werden und kann die überwiegende Zahl der Anionen in Lösung gebracht werden. Vorzugweise wird ein höherer Anteil an Wasser im Lösemittelgemisch oder gänzlich nur Wasser als Lösemittel eingesetzt, zumal viele Anionen nur in Wasser, aber oft nicht in organischen Lösemitteln oder nicht in manchen organischen Lösemitteln löslich sind.

Vorzugsweise wird als Lösemittel nur oder im wesentlichen nur Wasser zugesetzt oder bei einem Lösemittelgemisch als das mindestens eine weitere Lösemittel mindestens eines zugesetzt, das im Temperaturbereich von - 30 bis 200 °C, besonders bevorzugt im Bereich von - 10 bis 160 °C oder ganz besonders bevorzugt im Bereich von 1 bis 95 °C flüssig ist. Hierbei können die Lösemittel gegebenenfalls im wesentlichen selektiv wirken und vorwiegend oder nur die Edukte bzw. vorwiegend oder nur die Anionen und Oxidationsmittel lösen. Außerdem ist es vorteilhaft, wenn die Lösemittel nur wenig oder gar nicht mit dem Oxidationsmittel chemisch reagieren können, auch nicht bei erhöhter Temperatur. Die Lösemittel lösen üblicherweise die entstandenen Oligomere, Polymere, Copolymere oder/und Pfropfcopolymere der leitfähigen Polymere nicht oder nur gering an bzw. auf.

Vorzugsweise wird bei einem Lösemittelgemisch als das mindestens eine weitere Lösemittel insbesondere neben Wasser mindestens eines zugesetzt ausgewählt aus mehr oder weniger polaren, dipolar aprotischen und dipolar protischen Flüssigkeiten. Die Polarität und damit die Dielektrizitätskonstante kann dabei in weiten Bereichen variiert werden. Schwach polare Flüssigkeiten wie Chloroform oder/und Dichlormethan bzw. dipolar aprotische Flüssigkeiten wie Acetonitril oder/und Propylencarbonat werden insbesondere für die Edukte eingesetzt, bei denen nicht mit Wasser gearbeitet werden kann - insbesondere für Verbindungen wie z.B. auf Basis von Thiophenen. Polare protische Flüssigkeiten wie Wasser oder/und Alkohole werden meistens für die Oxidationsmittel und Anionen verwendet. Lösemittel mit geringerer Polarität wie z.B. Alkohole werden vorzugsweise zum Lösen der Edukte eingesetzt, während solche mit hoher Polarität wie z.B. Wasser vorzugsweise zum Lösen der Oxidationsmittel und Salze sowie zum Verdünnen der Säuren verwendet werden.

Vorzugsweise wird bei einem Lösemittelgemisch als das mindestens eine weitere Lösemittel mindestens ein Lösemittel zugesetzt ausgewählt aus Acetonitril, Chloroform, Dichlormethan, Ethanol, Isopropanol, Methanol, Propanol, Propylencarbonat und Wasser. Häufig werden Lösemittelgemische aus Wasser mit mindestens einem Alkohol verwendet, die gegebenenfalls auch noch mindestens ein weiteres Lösemittel oder/und noch mindestens eine weitere Flüssigkeit, die wie z.B. ein Öl kein Lösemittel ist, enthalten.

Besonders vorteilhaft ist auch die Verwendung eines Lösemittelgemisches aus Wasser und mindestens einem organischen Lösemittel, da z.B. Molybdat fast nur mit Wasser und da einige Pyrrol-Derivate üblicherweise nur mit zumindest einem geringen Zusatz von mindestens einem mit Wasser mischbaren organischen Lösemittel bei der erforderlichen Konzentration ausreichend löslich sind, wobei der Gehalt des mindestens einen organischen Lösemittels im Lösemittelgemisch insbesondere mindestens 2 Gew.-%, vorzugsweise mindestens 6 Gew.-%, besonders bevorzugt mindestens 12 Gew.-%, ganz besonders bevorzugt mindestens 18 Gew.-%, insbesondere sogar mindestens 24 Gew-% beträgt.

Der Umsetzungsgrad der Edukte zu den leitfähigen Polymeren liegt häufig in der Größenordnung von 85 bis 99 %, meistens im Bereich von 88 bis 96 %.

### Produkt-Gemisch:

Das Produkt-Gemisch, in dem leitfähiges Polymer gebildet wird oder/und gebildet ist, enthält die gleichen oder im wesentlichen die gleichen Gehalte an Bestandteilen wie das Edukt-Gemisch, wenn von den chemischen Reaktionen abgesehen wird. Es gelten daher die gleichen Mengenangaben entsprechend.

Es kann dem Produkt-Gemisch auch mindestens ein Stabilisator zugesetzt werden oder zugesetzt sein, der gegebenenfalls bei der zuvor angewandten Emulsionspolymerisation verwendet wurde. Vorzugsweise ist der mindestens eine Stabilisator auch mindestens ein ionischer oder nichtionischer Stabilisator - insbesondere mindestens ein polymerisierbares oder/und polymerisiertes Tensid, das gegebenenfalls Emulgator-Eigenschaften aufweist. Besonders bevorzugt wird der Stabilisator ausgewählt aus wasserlöslichen Polymeren auf Basis von Polyvinylalkohol, Polyvinylalkylether, Polystyrolsulfonat, Polyethylenoxid, Polyalkylsulfonat, Polyarylsulfonat, anionischen oder/und kationischen Tensiden, quaternären Ammoniumsalzen und tertiären Aminen. Ganz besonders bevorzugt sind sie ausgewählt aus der Gruppe der anionischen oder/und kationischen Tenside der Alkylsulfate und Alkylsulfonate vorzugsweise von Natrium, insbesondere mit einer Alkylkettenlänge im Bereich von 10 bis 18 Atomen. Diese wasserlöslichen Polymere bzw. Tenside sind vorteilhaft, um die Partikeln besser zu dispergieren.

Das Produkt-Gemisch kann gegebenenfalls im wesentlichen keine oder vorzugsweise 0,01 bis 5 Gew.-% an mindestens einem Stabilisator für die anionische, kationische, sterische oder/und neutrale Stabilisierung der Partikel im Edukt-Gemisch und im daraus entstehenden Produkt-Gemisch enthalten, besonders bevorzugt 0,5 bis 4 Gew.-% oder 0,05 bis 3 Gew.-%, ganz besonders bevorzugt 0,1 bis 2 Gew.-%.

### Behandlung der leitfähig beschichteten Partikel:

Vorzugsweise wird das Produkt-Gemisch mit beschichteten Partikeln durch Dekantieren, Filtrieren oder/und Gefriertrocknen, insbesondere durch Schleudern oder Zentrifugieren beim Filtrieren, oder/und durch Gaszirkulation oder/und Wärme insbesondere bei Temperaturen von bis zu 200 °C in inerter Atmosphäre oder vorzugsweise von bis zu 150 °C oder von bis zu 120 °C getrocknet. Dies ist üblicherweise bei beschichteten anorganischen Partikeln nötig. Hierdurch wird das Flüssigkeit(en) enthaltende Gemisch weitgehend oder gänzlich getrocknet. Soweit die beschichteten anorganischen Partikel z.B. durch Dekantieren, Filtrieren oder/und Trocknen weitgehend von Flüssigkeiten getrennt wurden, wird der Gehalt an Lösemitteln oft im Bereich von etwa 1, 2, 3, 4, 5 Gew.-% oder oft nur bei Gehalten von bis zu 10 Gew.-% liegen. Das getrocknete "Gemisch" wird im Folgenden als "leitfähiges Pulver" bezeichnet. In dieser Form ist die erfindungsgemäße Beschichtung auf den Partikeln stabil, auf Dauer elektrisch leitfähig und auch chemisch und in weiterer Weise physikalisch auf Dauer haltbar, solange nicht ein nukleophiler Angriff erfolgt z.B. bei Verwendung in einem ungeeigneten Lacksystem, bei übermäßiger thermischer Belastung wie z.B. oberhalb von 300 °C oder durch photochemischen Abbau z.B. bei Gegenwart von photoaktiven Partikeln wie z.B. TiO₂ (Anatas) oder/und bei starker Bewitterung. Die hierbei entstandene Beschichtung ist oft besonders haftfest oder/und weitgehend oder vollständig geschlossen.

Vorzugsweise wird bei der Trocknung nicht die gesamte Menge an Flüssigkeit(en) entfernt, sondern es ist vorteilhaft, wenn beispielsweise ein Flüssigkeitsgehalt im Bereich von 0,1 bis 12 Gew.-% bezogen auf den Gehalt an insbesondere anorganischen unbeschichteten Partikeln im Pulverhaufwerk erhalten bleibt. Das ist vorteilhaft, weil die Poren dann (noch) nicht durch die Rückquellung des leitfähigen Polymers kleiner werden können.

Bei Bedarf können die beschichteten anorganischen Partikel kurz gemahlen oder/und mit schwacher Wirkung gemahlen werden, um sogenannte Kuchen, Agglomerate oder/und gegebenenfalls auch Aggregate aufzubrechen oder/und schüttfähig zu machen. Gegebenenfalls werden die leitfähigen Pulver auch klassiert.

Vorzugsweise werden die beschichteten anorganischen Partikel zuerst dekantiert, filtriert oder/und getrocknet. Anschließend kann eine Extraktion der herauslösbaren Bestandteile aus der leitfähigen Beschichtung in der Art erfolgen, dass im wesentlichen keine eingebauten Anionen und im wesentlichen kein für das leitfähige Polymer zur Stabilisierung erforderliches Oxidationsmittel herausgelöst wird. Hierdurch wird die leitfähige stabile Struktur der leitfähigen Polymere und ihr Leitfähigkeitszustand im wesentlichen unverändert gelassen. Überschüssiges Oxidationsmittel, das z.B. mit einem Lack reagieren könnte, nicht-eingebaute Anionen, nicht umgesetzte Monomere und Oligomere und sonstige Verunreinigungen sowie sonstige nicht erforderliche Bestandteile können bei der Extraktion entfernt werden. Die Extraktion kann insbesondere mit einer sauren wässerigen Lösung wie z.B. mit Schwefelsäure, Salzsäure oder/und mit mindestens einem organischen Lösemittel wie z.B. Acetonitril, Chloroform oder/und Methanol erfolgen. Dieser Schritt kann die Qualität der Beschichtung deutlich verbessern.

Es hat sich gezeigt, dass nach der Herstellung der Core-Shell-Partikel manchmal ein Stabilisator vorteilhaft zugesetzt werden kann, aber auch oft nicht erforderlich ist. Der Zusatz eines Stabilisators zu einem bereits stabilen Produkt-Gemisch ist in manchen Ausführungsvarianten jedoch eher nachteilig. Andererseits kann ein instabiles Produkt-Gemisch, z.B. wenn die Konzentrationen zu hoch gewählt wurden, insbesondere an leitfähigem Polymer, durch Zusatz eines Stabilisators stabilisiert werden.

### Partikel beschichtet mit leitfähigem Polymer:

Die Aufgabe wird ferner gelöst mit anorganischen oder/und organischen Partikeln, die mit leitfähigem Polymer beschichtet sind, wobei das leitfähige Polymer im wesentlichen in oxidiertem, elektrisch leitfähigem Zustand vorliegt und wobei in dem leitfähigen Polymer ein Gehalt an beweglichen korrosionsschützenden Anionen und gegebenenfalls auch ein Gehalt an haftvermittelnden Anionen eingebaut ist, wobei die Partikel vorzugsweise nach einem erfindungsgemäßen Verfahren beschichtet wurden.

Die Gehalte der Bestandteile in der leitfähigen Beschichtung können in weiten Grenzen variiert werden. Die Variation ist insbesondere von der Dicke der Beschichtung abhängig: Es können ultradünne, dünne, dicke oder sehr dicke Beschichtungen aufgebracht werden, die eine Schichtdicke im Bereich von 0,1 bis 10 nm, von > 10 bis 100 nm, von > 100 nm bis 1 µm oder von > 1 µm bis 20 µm aufweisen. Es können auch Bestandteile mit geringer oder hoher Dichte ausgewählt werden. Ferner kann auch die spezifische Oberfläche der anorganischen Partikel sehr stark eingehen, wie z.B. bei SiO₂-Pulvern, die durch Flammenhydrolyse hergestellt wurden.

Vorzugsweise liegt der Gehalt an leitfähigen Polymeren in der leitfähigen Beschichtung bei Werten von etwa 50, 52, 54, 56, 58, 60, 62, 64, 66, 68, 70, 72, 74, 76, 78, 80, 82, 84, 86, 88, 90, 92, 94, 96, 98 bzw. 100 Gew.-% bezogen auf die Beschichtung. Insbesondere liegt der Gehalt an leitfähigen Polymeren in der leitfähigen Beschichtung im Bereich von 48 bis 100 Gew.-%, besonders bevorzugt im Bereich von 61 bis 97 Gew.-%, ganz besonders bevorzugt im Bereich von 69 bis 95 Gew.-%.

Vorzugsweise liegt der Gehalt an Anionen bei Werten von etwa 10, 12, 14, 16, 18, 20, 22, 24, 26, 28, 30 bzw. 32 mol% bezogen auf das leitfähige Polymer der Beschichtung. Vorzugsweise liegt der Gehalt an Oxidationsmitteln bezogen auf die Beschichtung bei Werten von 0 und möglichst nicht darüber. Insbesondere liegt der Gehalt an Anionen in der leitfähigen Beschichtung im Bereich von 8 bis 35 mol%, besonders bevorzugt im Bereich von 15 bis 33 mol%, oft im Bereich von 19 bis 32 mol%.

Vorzugsweise liegt der Gehalt an Partikeln am Gehalt an Partikeln einschließlich ihrer Beschichtungen und Einlagerungen auf Basis von leitfähigem Polymer bei Werten von etwa 6, 8, 10, 12, 14, 16, 18, 20, 22, 24, 26, 28, 30, 32, 34, 36, 38, 40, 42, 44, 46, 48, 50, 52, 54, 56, 58, 60, 62, 64, 66, 68, 70, 72, 74, 76, 78, 80, 82, 84, 86, 88, 90, 92, 94, 96 bzw. 98 Gew.-%. Insbesondere liegt der Gehalt an Partikeln einschließlich ihrer Beschichtungen und Einlagerungen auf Basis von leitfähigem Polymer in der bindemittel-reichen leitfähigen Beschichtung im Bereich von 5 bis 100 Gew.-%, besonders bevorzugt im Bereich von 55 bis 99 Gew.-%, ganz besonders bevorzugt im Bereich von 75 bis 98 Gew.-%, vor allem im Bereich von 85 bis 97 Gew.-%.

Vorzugsweise wird die mittlere Porengröße des auszubildenden leitfähigen Polymers vergrößert durch Erhöhung der Quellung des auszubildenden elektrisch leitfähigen Polymers durch Zusatz einer leicht verdampfbaren organischen Flüssigkeit wie z.B. Chloroform bei Polythiophen oder wie z.B. Alkohol bei Polypyrrol und bei manchen Polypyrrol-Derivaten.

Die erfindungsgemäßen Beschichtungen sind trotz ihrer geringen Dicke oft deutlich gefärbt. Sie sind vielfach hellgrün bis dunkelgrün, blassblau bis dunkelblau, hellgrau bis dunkelgrau, hellrot bis dunkelrot, violett, braun oder schwarz gefärbt. Die leitfähigen Polymere sind oft hydrophob, können aber je nach Anionengehalt, Oxidationszustand, pH-Wert und Substitution der Seitengruppen nach Art und Menge hydrophiler oder hydrophober gestaltet werden.

Die elektrische Leitfähigkeit der Beschichtung auf Partikeln, die mit einer leitfähiges Polymer enthaltenden Beschichtung umhüllt sind, kann in Abhängigkeit vom Oxidationsgrad, von der Art der Ladungsträger oder/und der Ladungsträgermobilität im Bereich von 10⁻⁸ bis 10⁰ S/cm liegen, vorzugsweise im Bereich von 10⁻⁶ bis 10⁻¹ S/cm, besonders bevorzugt im Bereich von 10⁻⁵ bis 10⁻² S/cm.

Der Dotierungsgrad kann mit Elementaranalyse oder XPS (Röntgenspektroskopie) ermittelt werden. Er liegt üblicherweise im Bereich von 5 bis 33 %, wobei ein Dotierungsgrad höher als 28 % in der Praxis nur teilweise erreicht wird. Oft werden Dotierungsgrade im Bereich von 20 % bis 33 % erreicht.

Vorzugsweise wird die Qualität der leitfähigen Beschichtung erhöht durch Einstellen des maximal möglichen Dotierungsgrades der leitfähigen Polymere mit beweglichen korrosionsschützenden Anionen, was zu einem hohen Depot-Effekt und oft auch zu einer ausreichenden elektrischen Leitfähigkeit der auszubildenden Beschichtung führt. Es genügt in vielen Anwendungen eine ausreichende elektrische Leitfähigkeit, weil eine zu hohe elektrische Leitfähigkeit evtl. dazu führt, dass der Potenzialgradient schnell abgebaut wird und die Triebkraft für die Anionenwanderung u.U. zu schnell abnimmt bzw. beendet ist (Kurzschlusseffekt), als dass die Anionen ihre korrosionsschützende Wirkung entfalten können.

Die leitfähiges Polymer enthaltende Beschichtung auf den Partikeln sollte vorzugsweise kein Oxidationsmittel oder nahezu kein Oxidationsmittel enthalten, da dieses für die korrosionsschützende Wirkung der beschichtete Partikel enthaltenden organischen Beschichtung schädlich sein kann. Es ist daher anzuraten, überschüssige(s) Oxidationsmittel aus dem Produkt-Gemisch zu entfernen, z.B. durch Dialyse, Extraktion oder/und Filtration.

Die Schichtdicke der Schicht des leitfähigen Polymers auf den Partikeln kann in breiten Bereichen variiert werden. Vorzugsweise sind die Schichtdicken im Bereich von 1 bis 200 nm, besonders bevorzugt im Bereich von 2 bis 100 nm, vor allem im Bereich von 3 bis 80 nm. Diese Schichten sind u.U. bei anorganischen Partikeln dünner als bei organischen Partikeln. Dickere Schichten sind zwar grundsätzlich denkbar und möglich, könnten aber ihre Grenzen finden, wenn die beschichteten Partikel nicht mehr dispergiert werden können.

### Herstellung und Zusatz von sogenannten "Haftvermittler-Partikeln" aus leitfähigem Polymer:

Es kann dem Bindemittel-reichen Gemisch auch mindestens ein sogenannter "Haftvermittler" auf Basis von leitfähigem Polymer zugesetzt werden, der insbesondere durch Emulsionspolymerisation hergestellt werden kann. Das ist mindestens eine Depotsubstanz mit jeweils mindestens einem Substituenten pro Molekül, der die Haftung zur metallischen Oberfläche verbessert. Insbesondere kann dadurch die Haftung an der Grenzfläche Metall und Bindemittel-Matrix verbessert werden und der Korrosionsschutz erhöht werden. Da der "Haftvermittler" auch immer mindestens ein bewegliches korrosionsschützendes Anion enthält, ist bei einem Potenzialgradienten infolge einer Beschädigung der Beschichtung eine schnelle kurze Wanderung derartiger Anionen zu dem beschädigten Bereich möglich, da die "Haftvermittler" nach dem Aufbringen der Bindemittel-reichen und noch Wasser-haltigen Beschichtung auf die metallische Oberfläche gezielt bevorzugt an die Grenzfläche zwischen Metall und Bindemittel-Matrix diffundieren und somit besonders nahe an der Grenzfläche adsorbiert werden (Grenzflächen-nahes Depot). Dadurch können die "Haftvermittler" nahe der Grenzfläche stärker angereichert werden, während die leitfähig beschichteten Partikel meistens mehr oder minder gleichmäßig über die Schichtdicke der Beschichtung verteilt liegen.

Der mindestens eine "Haftvermittler" kann hergestellt werden bei der gezielten Copolymerisation von Monomer(en)/Oligomer(en) mit Haftgruppen-substituierten Monomer-/Oligomer-Bausteinen, die aus den gleichen Monomer(en)/Oligomer(en) aufgebaut sind. Das/die Monomer(e)/Oligomer(e) können ausgewählt werden aus solchen auf Basis von Benzol, Furan, Imidazol, Naphthalen, Phenanthren, Phenol, Pyrrol, Thiophen oder/und Thiophenol. Die Substituenten können ausgewählt werden aus Alkansäuren wie z.B. Carbonsäuren, aus Phosphonsäuren, Phosphorsäuren, Sulfonsäuren und deren Salzen mit mindestens einer unverzweigten Alkylkette von unabhängig voneinander mindestens jeweils 6 bis 20 C-Atomen, wobei gegebenenfalls auch mindestens eine Doppelkette gebildet werden kann. Besonders bevorzugt sind substituierte Monomere oder/und substituierte Oligomere auf Basis von Benzol, Bipyrrol, Furan, Imidazol, Naphthalen, Phenanthren, Phenol, Pyrrol, Thiophen oder/und Thiophenol mit mindestens einer Substitution unabhängig voneinander durch mindestens eine Phosphonsäure.

Der "Haftvermittler" kann gesondert von den in dieser Anmeldung beschriebenen Präparations- und Beschichtungsverfahren durch Emulsionspolymerisation in einem gegebenenfalls Partikel-freien Gemisch hergestellt werden, das meistens eine Wasser-Alkohol-Mischung, mindestens ein Oxidationsmittel - vorzugsweise solche mit mindestens einem beweglichen korrosionsschützenden Anion mit Oxidationsmittelwirkung zumindest teilweise anstelle des gesonderten Oxidationsmittels, mindestens ein bewegliches korrosionsschützendes Anion, mindestens ein Monomer/Oligomer und mindestens ein mit Haftgruppen-substituiertes Monomer/Oligomer, das aus dem/den gleichen Monomer(en)/Oligomer(en) aufgebaut ist/sind, enthält. Die Emulsionspolymerisation findet vorzugsweise bei Raumtemperatur oder bei geringfügig höherer Temperatur statt bzw. bei einem pH-Wert vorzugsweise im Bereich von 2 bis 4. Hierdurch werden meistens in der Größe einstellbare, im wesentlichen kugelförmige Partikel gebildet, die weitgehend oder gänzlich aus dotiertem leitfähigen Polymer bestehen. Diese Partikel sind üblicherweise gut dispergierbar. Die damit hergestellten Dispersionen sind in der Regel stabil, so dass sie nicht bewegt werden müssen und die Partikel auch nicht redispergiert werden müssen.

Diese "Haftvermittfer-Partikel" können zusätzlich zu den beschichteten anorganischen oder/und organischen Partikeln in die Bindemittel-haltige Matrix eingebracht werden. Die Zugabemenge der "Haftvermittler-Partikel" kann in weiten Grenzen variiert werden, z.B. vorzugsweise in Mengen von 0,01 bis 20 Gew.-% der Bindemittel-reichen Zusammensetzung bezogen auf Feststoffgehalte zugesetzt werden, besonders bevorzugt in Mengen von 0,1 bis 10 Gew.-%, ganz besonders bevorzugt von 1 bis 5 Gew.-%.

### Verwendung der leitfähig beschichteten Partikel:

Die nach dem erfindungsgemäßen Verfahren beschichteten Partikel bzw. die mit leitfähigem Polymer beschichteten anorganischen oder/und organischen Partikel können verwendet werden zur Beschichtung von Oberflächen von metallischen Bändern, Drähten, Profilen oder Teilen zum Zwecke des Korrosionsschutzes.

### Besondere Vorteile und Überraschunaseffekte der erfindungsgemäßen Systeme und Partikel:

Die erfindungsgemäßen Verfahren zur Herstellung einer leitfähigen Beschichtung sind für die technische Anwendung besonders geeignet, da mit bereits sehr geringen Mengen an den vergleichsweise teuren Edukten große Partikelmengen bei im Vergleich zu etlichen anderen Beschichtungsverfahren recht einfachen Prozessschritten und geringem apparativen Aufwand beschichtet werden können. Bei den Verfahren des Standes der Technik, die zu ähnlichen Beschichtungen führen, ist jedoch der Zusatz eines Haftvermittlers wie z.B. eines Silanes, der Einbau eines Spacers wie z.B. einer Alkylkette in das Edukt, der Zusatz von Stabilisatoren auf Basis von wasserlöslichen Polymeren wie z.B. Hydroxymethylcellulose oder/und der Zusatz von Tensid(en) vor der Oxidation zu dem Gemisch anders als bei den erfindungsgemäßen Verfahren vorteilhaft, um die Haftung zur metallischen Oberfläche zu verbessern. Der Eintrag eines Haftvermittlers in das Gemisch gestaltet sich nach dem Stand der Technik oft problematisch, da für jede Partikelart ein besonderer Haftvermittler entwickelt werden muss. Ein Zusatz z.B. von Tensid(en) vor der Oxidation zu dem Gemisch ist bei dem erfindungsgemäßen Verfahren üblicherweise nicht erforderlich.

Wenn Pulver aus leitfähigem Polymer in eine organische Zusammensetzung wie z.B. in einen Lack oder in eine lackähnliche, vorwiegend oder gänzlich organische Beschichtung eingebracht wird, ist die Farbe der Pulverteilchen ohne hellen Kern deutlich intensiver und kann als Zusatz zu einer organischen Beschichtungszusammensetzung der daraus gebildeten Beschichtung einen unerwünschten Farbeindruck bzw. eine Fleckigkeit oder ein Changieren verleihen. Die elektrische Leitfähigkeit der derart hergestellten Beschichtungen kann ungleichmäßig sein und daher einen unvollständigen, nämlich lokal unterschiedlich guten bzw. schlechten Korrosionsschutz bieten: Die Perkolationsschwelle, ab der ein Leitfähigkeitspfad vorliegt, ist hierbei höher.

Überraschenderweise gelang es, das Freisetzen und Wandern der Anionen vom leitfähigen Polymer zum korrodierenden Bereich und die erhoffte korrosionsschützende Wirkung der erfindungsgemäßen Beschichtungen nicht nur in sehr spezifischen Versuchen wie z.B. mit einer Raster-Kelvin-Sonde (SKP), sondern die Anreicherung der freigesetzten korrosionsschützenden Anionen im korrodierenden Bereich und eine signifikante Steigerung des Korrosionsschutzes von metallischen Unterlagen mit einer organischen Beschichtung, die leitfähiges Polymer enthält, auch im makroskopischen Bereich mit Praxis-relevanten Proben und Versuchen wie z.B. im Salzsprühtest nachzuweisen.

Überraschenderweise war das Verfahren zur Beschichtung von anorganischen oder organischen Partikeln besonders einfach, reproduzierbar und umweltfreundlich. Hierbei gelang es, mit wenigen Kubikzentimetern an Edukt-Gemisch mehrere Kilogramm an Partikeln zu beschichten.

Überraschenderweise wurde jetzt gefunden, dass eine Beschichtung von Nanopartikeln besonders erfolgreich verlief, nämlich mit einem hohen Beschichtungsgrad und weitgehend ohne Agglomeration. Andererseits konnten auch relativ grobe Partikel mit dem erfindungsgemäßen Verfahren überraschend gut beschichtet werden, da eine homogene, oft geschlossene Beschichtung auf diesen Partikeln trotz ihrer Größe und ihrer schwierigen Dispergierbarkeit ausgebildet wurde.

Überraschenderweise gelang es, das leitfähige Polymer in einer Bindemittel-reichen Zusammensetzung mit Hilfe der leitfähiges Polymer enthaltenden Partikel besonders einfach, stabil und gleichmäßig zu verteilen, insbesondere beim Verfilmen.

Überraschenderweise war die Auswahl der einbaubaren Anionen bei der chemischen Polymerisation der leitfähigen Polymere fast nicht eingeschränkt.

Überraschenderweise waren die mit leitfähigem Polymer beschichteten Partikel bei der Lagerung in flüssigem Medium in breiten pH-Wert-Bereichen stabil und in diesen auch stabiler als erwartet, so dass keine Deaktivierung des leitfähigen Polymers beobachtet wurde.

Überraschenderweise sind die leitfähiges Polymer enthaltenden Partikel mechanisch außerordentlich stabil, und ihre Hüllen haften sehr gut auf den Partikeln, so dass auch bei Ultraschallbehandlungen keine Beschädigungen wahrgenommen wurden bzw. keine oder keine wesentlichen Beschädigungen sogar bei länger anhaltender Abscheidung der leitfähigen Polymere auf Partikeln im Gemisch unter Ultraschalleinwirkung beobachtet wurden.

Ferner war es überraschend, dass beschichtete Partikel, die während ihrer Lagerung aus der anfänglich stabilen Dispersion sich am Boden des Gefäßes ablagerten oder gelierten, wieder redispergiert werden konnten und dann ohne Nachteile in eine im wesentlichen organische Dispersion einer lackähnlichen Zusammensetzung eingebracht und später in eine im wesentlichen organische Beschichtung eingebaut werden konnten.

### Beispiele und Vergleichsbeispiele:

Die im Folgenden beschriebenen Beispiele sollen den Gegenstand der Erfindung beispielhaft näher erläutern.

### 1. Präparationsgang der leitfähigen Polymere und Beschichtung von anorganischen Partikeln unter Variation der Zusammensetzung des Gemisches:

Es wurde die Präparation der leitfähigen Polymere und gleichzeitig die Beschichtung der anorganischen Partikel in einem Eintopfverfahren bei einer über die Reaktionen konstant gehaltenen Temperatur jeweils im Bereich von 50 bis 60 °C gearbeitet.

Das Edukt-Gemisch wurde hergestellt, indem zu 100 ml destilliertem Wasser zuerst Isopropanol und jeweils 10 bis 15 g eines Pulvers ausgewählt aus Al₂O₃, BaSO₄, CaCO₃, CuO, SiO₂, SnO₂, TiO₂ als Anatas bzw. Rutil, ZnO, grobkristalliner Biotit-Glimmer, aufbereitetem Montmorillonit, Quarz-reichem Seesand, Töpferton bzw. daneben auch vorbehandeltes Cellulosepulver geeignet für Säulenchromatographie unter Rühren zugesetzt wurde. Anschliessend wurden 0,1 bis 0,5 ml konzentrierte Schwefelsäure zugegeben, um den pH-Wert auf Werte im Bereich von 4 bis 6 einzustellen, wobei diese Säure zugleich als Lösungsvermittler für Molybdänsäure und Monomer/Oligomer diente. Danach erfolgte der Zusatz von 0,3 ml des Monomers/Oligomers gelöst in 20 bis 50 ml Isopropanol von Raumtemperatur. Als Edukt wurde jeweils eines ausgewählt aus Pyrrol, N-Methylpyrrol und Ethylendioxythiophen. Nach einer Rührzeit von 15 bis 20 Minuten wurde eine auf die Gemisch-Temperatur vorgewärmte wässerige Molybdänsäurelösung (H₂MoO₄) von 1,5 bis 3 g/L mit einem Gehalt von etwa 20 % Isopropanol zugesetzt. Während der gesamten Reaktionszeit wurde das Gemisch gerührt. Nach einer weiteren Rührzeit im Bereich von 30 bis 150 Minuten wurden die beschichteten anorganischen Partikel und die in der Dispersion gebildeten Partikel aus leitfähigem Polymer durch Filtrieren von überschüssigem Lösemittelgemisch und Oxidationsmittel abgetrennt. Danach wurden die Partikel bei 60 bis 80 °C über 20 bis 30 Minuten im Trockenschrank getrocknet, wodurch ein trockener Filterkuchen entstand. Der Filterkuchen wurde im Mörser zerstampft und über 10 bis 15 Minuten weitestgehend homogen zermahlen. Alternativ wurde teilweise eine Kugelmühle eingesetzt. Das Mahlgut enthielt vollständig und teilweise beschichtete anorganische Partikel, isolierte Reste der Beschichtungshülle, Partikel aus leitfähigem Polymer und nicht beschichtete anorganische Partikel (Partikelmischung). Es wurde lichtmikroskopisch abgeschätzt, dass jeweils etwa 85 bis 95 % der sichtbaren Partikel leitfähig beschichtete Partikel waren. Grundsätzlich konnten hierbei anorganische Partikel mit einer mittleren Partikelgröße im Bereich von 5 nm kel mit einer mittleren Partikelgröße im Bereich von 5 nm bis 5 mm hierbei eingesetzt werden. Die anorganischen Partikel wurden beim Mahlen je nach Beschaffenheit nicht oder in geringem Umfang heruntergemahlen. Bei Partikeln größer etwa 100 bis 200 nm lagen die Partikelverteilungen der anorganischen Partikel in großer Breite der Partikelverteilung vor, unterhalb nahezu monodispers. Nur die Partikel etwa unter 100 nm waren im wesentlichen kugelförmig. Die Beschichtung der Partikel wies eine Schichtdicke im Bereich von 2 bis 10 nm auf, beobachtet im Transmissionselektronenmikroskop. Die Gehalte an leitfähigem Polymer wurden durch Thermogravimetrie bestimmt und lagen im Bereich von 3 bis 10 Gew.- % der trockenen Partikelmischung. Bei jedem Versuch wurde eine elektrische Leitfähigkeit und somit eine erhöhte Dotierung erzielt. Die Beschichtung der leitfähigen Polymere auf den Partikeln (Core-Shell-Partikel) haftete gut, so dass die Beschichtung auch nicht schnell abgerieben oder abgemahlen wurde, auch nicht im Ultraschallbad. Es wurde eine große Zahl von Versuchen durchgeführt, von denen ein kleiner Teil mit den Angaben in Tabelle 1 wiedergegeben wird.

Zusätzlich wurde die Partikelmischung in ergänzenden Versuchen in eine gänzlich wasserfreie ethanolische Lösung oder in eine Ethylacetat-Lösung eingebracht und im Ultraschallbad dispergiert, um dann zwei Bleche in dieses Dispersion zu hängen und um die beschichteten leitfähigen Partikel über eine Kataphorese wie bei einer kathodischen Elektrotauchlackierung unter einer Spannung im Bereich von 10 und 100 V bei einer Stromstärke im Bereich von 2 bis 20 mA über eine Zeit von 1 bis 5 Minuten auf dem Kathoden-Blech niederzuschlagen. Die Kataphorese stellte für die zu beschichtenden metallischen Körper aufgrund der Kataphorese keine Korrosionsgefährdung dar - anders als bei einer Anaphorese oder bei einer Elektropolarisation. Dadurch ergab sich eine sehr gleichmäßige, dünne, haftfeste, z.T. beidseitig vollständige Beschichtung der Bleche mit der Partikelmischung. Danach wurden die beschichteten Bleche getrocknet. Die Schichtdicken wurden auf Werte im Bereich von 2 bis 15 µm abgeschätzt. Diese Beschichtung auf den Blechen war deutlich besser als wenn die Partikelmischung z.B. als Dispersion aufgestrichen worden wäre. Die Gefügestruktur der Beschichtung auf den Blechen wird im wesentlichen durch die Morphologie der eingebauten beschichteten Partikel bestimmt. Dabei war es überraschend, dass das leitfähige Polymer bei allen Stadien der z.T. etwas drastischen Behandlung seine Eigenschaften - insbesondere seine elektrische Leitfähigkeit, seine chemische und thermische Stabilität sowie seine Korrosionsschutzeigenschaften - nicht verschlechterte.

**Tabelle 1: Zusammensetzungen der Gemische mit anorganischen Partikeln und Eigenschaften der Beschichtungen**

| Gehalte in µL, ml bzw. g | Vergleichs B 1 | Vergleichs B 2 | Vergleichs B 3 | Vergleichs B 4 | Vergleichs B 5 | Vergleichs B 6 | Vergleichs B 7 | Vergleichs B 8 | Vergleichs B 9 | Vergleichs B 10 | Vergleichs B 11 |
|---|---|---|---|---|---|---|---|---|---|---|---|
| Pyrrol in µL | 300 | 300 | 300 | 300 | 300 | 300 | 300 | 300 | | | |
| Ethylendioxythiophen in µL | | | | | | | | | 300 | 300 | 300 |
| Benzoat in g | 6 | | | | | | | | | | |
| Nitrosalicylat in g | | 6 | | | | | | 3 | | | |
| Hexafluorotitanat in g | | | 6 | | | | | | | | |
| Salicylat in g | | | | 6 | 6 | 6 | | | | | |
| Tartrat in g | | | | | 6 | | 6 | | | | |
| Molybdat in g | | | | 3 | 3 | | | 2 | 3 | 3 | 3 |
| Wotframat in g | | | | | | 3 | 3 | | | | |
| Ce⁴⁺-Sulfat in g | 3 | | | | | | | | | | |
| Fe^{3*}-Nitrat in g | | 3 | | | | | | | | | |
| Fe³⁺-Sulfat in g | | | 3 | | | | | | | | |
| Al₂O₃ C, Degussa, 12 nm, in g | 15 | 15 | 15 | 15 | 15 | 15 | 15 | 15 | 15 | 15 | 15 |
| Isopropanol in ml | 100 | 100 | 100 | 100 | 100 | 100 | 100 | 100 | 100 | | 100 |
| dest. Wasser in ml | 150 | 150 | 150 | 150 | 150 | 150 | 150 | 150 | 150 | 250 | 200 |
| ph-werft | 4 - 6 | 4 - 6 | 4 - 6 | 4 - 6 | 4 - 6 | 4 - 6 | 4 - 6 | 4 - 6 | 4 - 6 | 4 - 6 | 4 - 6 |
| Temperatur in °C | 40 - 60 | 40 - 60 | 40 - 60 | 40 - 60 | 40 - 60 | 40 - 60 | 40 - 60 | 40 - 60 | 40 - 60 | 40 - 60 | 40 - 60 |
| elektrische Leitfähigkeit in S/cm | n.b. | 10⁻² | n.b. | n.b. | n.b. | n.b. | n.b. | n.b. | n.b. | n.b. | n.b. |
| Farbe | blau | blau | grau | grau | graublau | grau | graublau | graublau | graublau | graublau | graublau |

| | | | | | | | | | | | |
|---|---|---|---|---|---|---|---|---|---|---|---|
| ***** Anionen mit Oxidationsmittelwirkung | | | | | | | | | | | |

### 2. Präparationsgang und Beschichtung von organischen Partikeln unter Variation der Zusammensetzung des Gemisches:

Es wurde zuerst bei Raumtemperatur ein wässeriges Edukt-Gemisch mit allen Bestandteilen einschließlich der organischen Partikel und gegebenenfalls eines Salzes, das keine oxidierenden Eigenschaften aufweist, dessen Anion aber korrosionsschützende Eigenschaften hat, gegebenenfalls auch unter Zusatz von 1 bis 10 Gew.-% Ethanol, zur Herstellung des leitfähigen Polymers angesetzt - mit Ausnahme des Oxidationsmittels. Die jeweiligen Zusammensetzungen werden in Tabelle 2 angeführt. Falls das Salz oxidierende Eigenschaften und das Anion des Salzes korrosionsschützende Eigenschaften aufwies, wurde das Salz stattdessen erst nach dem Homogenisieren zugegeben. Bei Verwendung von Molybdat bzw. Wolframat als Oxidationsmittel wurde das Edukt-Gemisch vor der Zugabe des Molybdats bzw. Wolframats auf eine Temperatur von 50 °C erwärmt, falls der pH-Wert oberhalb 3 lag. Der pH-Wert wurde mit Phosphorsäure eingestellt. Das Edukt-Gemisch wurde ca. 20 Minuten bei dieser Temperatur gerührt, um eine intensive Vermischung der Bestandteile zu ermöglichen, da sonst eine Phasentrennung hätte auftreten können. Es musste bereits bei der Zugabe des Oxidationsmittels eine gute Homogenität der Lösung (Edukt-Gemisch) bestehen.

Als organische Partikel wurde Polystyrol, Polystyrol-Butylacrylat bzw. Polybutylacrylat mit definierten Zusammensetzungen und Glasübergangstemperaturen T_{g} eingesetzt, die als wässerige Dispersionen zugesetzt wurden. Die organischen Partikel hatten fast monodisperse Partikelgrößenverteilungen und waren weitgehend kugelförmig. Die mittlere Partikelgrößenverteilung konnte zwischen 150 und 500 nm gewählt werden, wobei zu jeder dieser Verteilungen sowohl die Glasübergangstemperatur T_{g}, als auch die chemische Zusammensetzung variiert wurden.

**Tabelle 2: Zusammensetzungen der Gemische mit organischen Partikeln und Eigenschaften der Beschichtungen**

| Gehalte in ml bzw. g | | Vergleichs B 21 | Vergleichs B 22 | Vergleichs B 23 | Vergleichs B 24 | Vergleichs B 25 | Vergleichs B 26 | Vergleichs B 27 | Vergleichs B 28 | Vergleichs B 29 | Vergleichs B 30 | Vergleichs B 31 | Vergleichs B 32 | Vergleichs B 33 | Vergleichs B 34 |
|---|---|---|---|---|---|---|---|---|---|---|---|---|---|---|---|
| dest. Wasser in ml | | 100 | 100 | 100 | 100 | 100 | 100 | 100 | 100 | 100 | 100 | 100 | 100 | 100 | 100 |
| Ethanol in ml | | 1 | 3 | 5 | 10 | | | | | 5 | 5 | 5 | 5 | 5 | 5 |
| Isopropanol in ml | | | | | | 1 | 3 | 5 | 10 | | | | | | |
| Pyrrol in g | | 0,1 | 0,5 | 1,5 | 5 | 0,1 | 0,5 | 1,5 | 5 | | | | | | |
| N-Methylpyrrol in g | | | | | | | | | | 1,5 | | | | | |
| 3-Methoxypyrrol in g | | | | | | | | | | | 1,5 | | | | |
| 3-Methylpyrrol in g | | | | | | | | | | | | 1,5 | | | |
| 3-Ethylpyrrol in g | | | | | | | | | | | | | 1,5 | | |
| 3-Phenylpyrrol in g | | | | | | | | | | | | | | 1,5 | |
| Ethylendioxythiophen in g | | | | | | | | | | | | | | | 1,5 |
| Benzoat in g | | 3,0 | 3,0 | 3,0 | 3,0 | 3,0 | 3, 0 | 3, 0 | 3, 0 | 3,0 | 3, 0 | 3,0 | 3,0 | 3,0 | 3,0 |
| NH₄S₂O₈ in g | | 0,1 . | 0,5 | 1,5 | 5 | 0,1 | 0,5 | 1,5 | 5 | 1,5 | 1,5 | 1,5 | 1,5 | 1,5 | 1,5 |
| Polystyrol, in g | | 10 | 10 | 10 | 10 | 10 | 10 | 10 | 10 | 10 | 10 | 10 | 10 | 10 | 10 |
| mittlere Partikelgröße in nm | | 300 | 300 | 300 | 300 | 300 | 300 | 300 | 300 | 300 | 300 | 300 | 300 | 300 | 300 |
| Glasübgtemp. T_{g} d. Partikel °C | | 100 | 100 | 100 | 100 | 100 | 100 | 100 | 100 | 100 | 100 | 100 | 100 | 100 | 100 |
| pH-Wert | | 3 | 3 | 3 | 3 | 3 | 3 | 3 | 3 | 3 | 3 | 3 | 3 | 3 | 3 |
| Temperatur in °C | | 25 | 25 | 25 | 25 | 25 | 25 | 25 | 25 | 25 | 25 | 25 | 25 | 25 | 25 |
| Größe der organischen beschichteten Partikel in nm | | 305 | 310 | 315 | 320 | 305 | 310 | 315 | 320 | 315 | 315 | 315 | 315 | 315 | 315 |
| elektrische Leitfähigkeit in S/cm | | 10⁻⁶ | 10⁻⁵ | 10 ⁻⁴ | 10⁻³ | 10⁻⁶ | 10⁻⁵ | 10⁻⁴ | 10⁻³ | n.b. | n.b. | n.b. | n.b. | n.b. | n.b. |
| Dotierungsgrad ca. in % | | 30 | 30 | 30 | 30 | 30 | 30 | 30 | 30 | n.b. | n.b. | n.b. | n.b. | n.b. | n.b. |

| Gehalte in ml bzw. g | Vergleichs B 35 | Vergleichs B 36 | Vergleichs B 37 | Vergleichs B 38 | Vergleichs B 39 | Vergleichs B 40 | Vergleichs B 41 | Vergleichs B 42 | Vergleichs B 43 | Vergleichs B 44 | Vergleichs B 45 | Vergleichs B 46 | Vergleichs B 47 | Vergleichs B 48 | Vergleichs B 49 |
|---|---|---|---|---|---|---|---|---|---|---|---|---|---|---|---|
| dest. Wasser in ml | 100 | 100 | 100 | 100 | 100 | 100 | 100 | 100 | 100 | 100 | 100 | 100 | 100 | 100 | 100 |
| Ethanol in ml | 5 | 5 | 5 | 5 | 5 | 5 | 5 | 5 | 5 | 5 | 5 | 5 | 5 | 5 | 5 |
| Isopropanol in ml | | | | | | | | | | | | | | | |
| Pyrrol in g | 1,5 | 1,5 | 1,5 | 1,5 | 1,5 | 1,5 | 1,5 | 1,5 | 1,5 | 1,5 | 1,5 | | | | 1,5 |
| N-Methylpyrrol in g | | | | | | | | | | | | 1,9 | 1,9 | 1,9 | |
| Molybdat in g | | 1,65 | 3,30 | 10,2 | 13,6 | 20,3 | 10,2 | 10,2 | 10,2 | 10,2 | 10,2 | 10,2 | 13,6 | 20,3 | 10,2 |
| Wolframat in g | 3,3 | | | | | | | | | | | | | | |
| Polystyrol, in g | 10 | 10 | 10 | 10 | 10 | 10 | | | | | | | | | |
| Polystyrol-Butylacrylat in g | | | | | | | 10 | 10 | 10 | 10 | 10 | 10 | 10 | 10 | |
| Polybutylacrylat in g | | | | | | | | | | | | | | | 10 |
| Styrol, : Butylacrylat - Verhältnis | | | | | | | 9 : 1 | 5 : 1 | 2 : 5 | 3 : 5 | 4 : 5 | 3 : 5 | 3 : 5 | 3 : 5 | |
| mittlere Partikelgröße in nm | 300 | 300 | 300 | 300 | 300 | 300 | 300 | 300 | 300 | 300 | 300 | 300 | 300 | 300 | 300 |
| Glasübgtemp. T_{g} d. Partikel °C | 100 | 100 | 100 | 100 | 100 | 100 | 80 | 60 | 40 | 20 | -10 | 20 | 20 | 20 | - 40 |
| pH-Wert | 2 | 2 | 2 | 2 | 2 | 2 | 2 | 2 | 2 | 2 | 2 | 2 | 2 | 2 | 2 |
| Temperatur in °C | 25 | 25 | 25 | 25 | 25 | 25 | 25 | 25 | 25 | 25 | 25 | 25 | 25 | 25 | 25 |
| Größe der organischen beschichteten Partikel in nm | 315 | 315 | 315 | 315 | 315 | 315 | 315 | 315 | 315 | 315 | 315 | 315 | 315 | 315 | 315 |
| elektrische Leitfähigkeit in S/cm | n.b. | n.b. | n.b. | n.b. | n.b. | n.b. | n.b. | n.b. | n.b. | n.b. | n.b. | n.b. | n.b. | n.b. | n.b. |
| Dotierungsgrad ca. in % | 17 | 15 | 19 | 23 | 27 | 30 | 23 | 23 | 23 | 23 | 23 | 18 | 21 | 24 | 23 |

| Gehalte in ml bzw. g | Vergleichs B 50 | Vergleichs B 51 | | Vergleichs B 52 | | Vergleichs B 53 | | Vergleichs B 54 | | Vergleichs B 55 | | Vergleichs B 56 | | Vergleichs B 57 | |
|---|---|---|---|---|---|---|---|---|---|---|---|---|---|---|---|
| dest. Wasser in ml | 100 | 100 | | 100 | | 100 | | 100 | | 100 | | 100 | | 100 | |
| Ethanol in ml | 5 | 5 | | 5 | | 5 | | 5 | | 5 | | 5 | | 5 | |
| Pyrrol in g | 1,5 | 1,5 | | 1,5 | | 1,5 | | 1,5 | | 1,5 | | 1,5 | | 1,5 | |
| Molybdat in g | 3,41 | 3,41 | | 3,41 | | 3,41 | | | | | | | | | |
| Wolframat in g | | | | | | | | 3,30 | | 3,30 | | 3,30 | | 3,30 | |
| Polystyrol-Butylacrylat in g | 10 | 10 | | 10 | | 10 | | 10 | | 10 | | 10 | | 10 | |
| Styrol : Butylacrylat - Verhältnis | 3 : 5 | 3 : 5 | | 3 : 5 | | 3 : 5 | | 3 : 5 | | 3 : 5 | | 3 : 5 | | 3 : 5 | |
| mittlere Partikelgröße in nm | 300 | 300 | | 300 | | 300 | | 300 | | 300 | | 300 | | 300 | |
| Glasübgtemp. T_{g} d. Partikel °C | 20 | 20 | | 20 | | 20 | | 20 | | 20 | | 20 | | 20 | |
| pH-Wert | 1 | 3 | | 4 | | 5 | | 1 | | 3 | | 4 | | 5 | |
| Temperatur in °C | 25 | 25 | | 50 | | 50 | | 25 | | 25 | | 50 | | 50 | |
| Größe der organischen beschichteten Partikel in nm | 315 | 315 | | 315 | | 315 | | 315 | | 315 | | 315 | | 315 | |
| elektrische Leitfähigkeit in S/cm | n.b. | n.b. | | n.b. | | n.b. | | n.b. | | n.b. | | n.b. | | n.b. | |
| Dotierungsgrad ca. in % | 28 | 28 | | 28 | | 28 | | 28 | | 28 | | 28 | | 28 | |

| | | | | | | | | | | | | | | | |
|---|---|---|---|---|---|---|---|---|---|---|---|---|---|---|---|
| * Anionen mit Oxidationsmittelwirkung | | | | | | | | | | | | | | | |

Die mittlere Partikelgröße der unbeschichteten und beschichteten organischen Partikel wurde unter dem Rasterelektronenmikroskop ermittelt. Die elektrische Leitfähigkeit wurde auf den Interdigitalstrukturen (kammartigen Elektroden) mit Hilfe der Zweipunktmethode an Preßlingen von dotiertem leitfähigen Pulver bestimmt. Alle leitfähig beschichteten organischen Partikel waren schwarz.

Unter den Edukt-Lösungen hatten sich insbesondere solche mit Pyrrol und N-Methylpyrrol bewährt, wobei diese besonders vorteilhaft auf organischen Partikeln auf Basis von Polystyrol-Butylacrylat im Verhältnis von 50 bis 90 Gew.-% Styrol-Anteil aufgebracht wurden. Als Oxidationsmittel und gleichzeitig als Anionen hatten sich insbesondere Molybdat oder Wolframat vorteilhaft verhalten. Beim Molybdat und Wolframat hatte sich als wichtig ergeben, dass eine fast maximale Dotierung des leitfähigen Polymers bei bis zu etwa 28 % bezogen auf die Polymereinheit möglich und vorteilhaft ist.

Bei den Vergleichsbeispielen B 21 bis Vergleichsbeispielen B 28 wurde mit dem zunehmenden Gehalt an Pyrrol auch die Schichtdicke der Beschichtung aus leitfähigem Polymer erhöht, etwa von 5 nm bis 10 nm. Beim Vergleichsbeispiel B 34 wurde ein Thiophen anstelle von Pyrrol verwendet. Beim Vergleichsbeispiel B 35 wurde im Vergleich zu Vergleichsbeispiel B 23 Wolframat zugesetzt. Bei den Vergleichsbeispielen B 36 bis Vergleichsbeispielen B 40 wurde im Vergleich zu Vergleichsbeispielen B 23 und Vergleichsbeispielen B 35 Molybdat Vergleichs eingesetzt. Die Konzentration der beweglichen korrosionsschützenden Anionen ist hier höher und dadurch die DepotWirkung besser. Bei der Vergleichsbeispielen B 41 bis Vergleichsbeispielen B 48 wurde aufgrund der Varia-tion der Zusammensetzung der organischen Partikel die Verfilmbarkeit der Partikel verändert: Bei Vergleichsbeispielen B 43 und Vergleichsbeispielen B 44 ist die Verfilmbarkeit am besten, während die Verfilmbarkeit bei Glasübergangstemperaturen T_{g} kleiner 20 °C nicht mehr so gut kontrollierbar war, wenn nicht bei Temperaturen unter Raumtemperatur gearbeitet wurde. Bei den Vergleichsbeispielen B 50 bis Vergleichsbeispielen B 57 wurde der pH-Wert bzw. das Oxidationsmittel variiert, wobei bessere Ergebnisse bei pH-Werten von 4 und 5 für Molybdat und beim pH-Wert 5 für Wolframat erreicht wurden. Bezüglich der Beweglichkeit der beweglichen korrosionsschützenden Anionen sollten die Vergleichsbeispiele B 52, Vergleichsbeispiele B 53 und Vergleichsbeispiele B 57 die beste Beweglichkeit der Anionen zeigen, da diese Anionen besonders klein sind und bei höheren pH-Werten die Neigung zur Bildung großer Polyanionen geringer ist.

### 3. Präparationsgang und Beschichtung von organischen Partikeln unter Variation des Oxidationsmittels

Bei diesen Beispielen und Vergleichsbeispielen wurde beim 2. Präparationsgang gearbeitet.

Die Edukt-Lösung wurde in ersten Arbeitsschritten hergestellt, indem zu 50 ml destilliertem Wasser zunächst insgesamt 50 g einer wässerigen Dispersion von Polystyrol oder/und Polybutylacrylat mit einem Gehalt von 20 Gew.-% an derartigen organischen Partikeln von etwa 350 nm mittlerer Größe und 1,4 g frisch destilliertes Pyrrol zugesetzt wurden. In weiteren Versuchen, wurde Pyrrol durch N-Methylpyrrol ausgetauscht. Die Lösung wurde über 20 Minuten gerührt, um das Gemisch bei Raumtemperatur zu homogenisieren.

Es wurde dann eine Oxidationsmittellösung vorbereitet, indem in 50 ml Wasser 0,1 bis 1 Mol Oxidationsmittel wie a) Phosphomolybdat oder b) H₂O₂ mit ≤ 10⁻⁴ molarem Fe³⁺-Chlorid mit H₂O₂ im Überschuss gelöst wurde. Diese Lösung wurde dann nach dem Homogenisieren der Edukt-Lösung tropfenweise zugegeben. Das entstandene Gemisch wurde dann bei Raumtemperatur 4 bis 6 Stunden gerührt. Hierbei wurden in der Dispersion auf den organischen Partikeln ca. 10 nm dicke Beschichtungen aus Polypyrrol gebildet. Außerdem wurde vor Zugabe des Oxidationsmittels bei a) das Anion des Oxidationsmittels als Dotierion in das Polypyrrol bzw. in ein entsprechendes Derivat eingelagert, während bei b) vor Zugabe des Oxidationsmittels jeweils ein beliebiges korrosionsschützendes bewegliches Anion (Molybdat, Hexafluorotitanat, Hexafluorozirkonat, Wolframat) dem Edukt-Gemisch zusätzlich zugesetzt wurde.

Anschließend wurde das Reaktionsgemisch 48 Stunden lang über eine Cellulosemembran mit 10.000 MWCO gegen bidestilliertes Wasser dialysiert, um nicht-abreagierte Edukte, Oxidationsmittel und Anionen abzutrennen. Die Partikel waren mit Beschichtungen im Bereich von 5 bis 20 nm Dicke versehen. Die so erhaltenen Dispersionen waren länger als ein halbes Jahr stabil und verwendbar.

### 4. Präparationsgang unter Herstellung von "Haftvermittler-Partikeln" auf Basis leitfähiger Polymere:

Es wurde bei Raumtemperatur ein wässeriges, 5 % Ethanol enthaltendes Edukt-Gemisch auf Basis von Haftgruppen-substituiertem Monomer/Oligomer mit Monomer/Oligomer, das aus dem gleichen Monomer/Oligomer, nämlich Pyrrol, aufgebaut ist, in der wässerigen Lösung hergestellt. Als Haftgruppen wurde eine unverzweigte Alkylphosphonsäure mit 10 oder mit 12 C-Atomen verwendet. Hierzu wurde ein Salz des beweglichen korrosionsschützenden Anions, Ammoniummolybdat, der Lösung zugesetzt. Das Molybdat diente gleichzeitig als Oxidationsmittel. Während der ganzen Zeit wurde das Gemisch gerührt. Es wurde bei pH-Werten im Bereich von 2,5 bis 4 gearbeitet, wobei der pH-Wert über den Gehalt der Alkylphosphonsäure eingestellt wurde. Der pKₛ-Wert der haftvermittelnden Gruppen bestimmt den pH-Wert des Edukt-Gemisches und ermöglicht eine Micellbildung des Haftgruppen-substituierten Monomers/Oligomers im Gemisch. Unter Rühren erfolgte die Emulsionspolymerisation über 10 bis 24 Stunden. Die Reinigung der Dispersion erfolgte durch Dialyse, um eine Alkohol-haltige wässerige Dispersion der "Haftvermittler-Partikel" weitgehend frei von überschüssigen Anionen und gänzlich frei von Oxidationsmittel und nicht abreagiertem Monomer/Oligomer zu erhalten. Die Dispersion enthielt im wesentlichen kugelförmige "Haftvermittler-Partikel" , deren Partikelgrößenverteilung nahezu monodispers war und deren mittlere Partikelgröße beliebig im Bereich von 50 bis 400 nm eingestellt werden konnte.

## Patentansprüche

1. Mit leitfähigem Polymer auf Basis von unsubstituierten oder/und substituierten Verbindungen auf der Basis von Pyrrol oder/und Thiophen beschichtete anorganische oder/und organische Partikel, die eine Beschichtung auf Basis von leitfähigem Polymer mit Titan oder/und Zirkonium enthaltenden Anionen aufweisen.

2. Verwendung der beschichteten Partikel nach Anspruch 1 zur Beschichtung von Oberflächen von metallischen Bändern, Drähten, Profilen oder Teilen zum Zwecke des Korrosionsschutzes.

## Claims

1. Inorganic and/or organic particles, coated with conductive polymer based on unsubstituted and/or substituted compounds based on pyrrole and/or thiophene, which particles have a coating based on conductive polymer with anions containing titanium and/or zirconium.

2. Use of the coated particles according to claim 1 for coating surfaces of metallic tapes, wires, profiles or parts for the purpose of corrosion protection.

## Revendications

1. Particules inorganiques et/ou organiques, revêtues de polymère conducteur à base de composés à base de pyrrole et/ou de thiophène, avec et/ou sans substituant(s), qui présentent un revêtement à base de polymère conducteur, comportant des anions qui contiennent du titane et/ou du zirconium.

2. Utilisation de particules revêtues, conformes à la revendication 1, pour revêtir des surfaces de rubans, fils, profilés ou pièces métalliques afin de les protéger contre la corrosion.
